# EUROPEAN PATENT SPECIFICATION

(11) **EP 4 227 060 B1**
(45) Date of publication and mention of the grant of the patent: **01.04.2026**
(21) Application number: 23155408.0
(22) Date of filing: 07.02.2023
(51) Int. Cl.: B29C 44/44, B29C 44/04, B29C 44/06, B29C 44/58, B29C 44/34

(54) **APPARATUS FOR OBTAINING INSULATION PANELS, PROCESS FOR OBTAINING SUCH INSULATION PANELS BY MEANS OF SUCH APPARATUS, INSULATION PANELS SO OBTAINED AND USE OF THESE LATTER**
VORRICHTUNG ZUR HERSTELLUNG VON DÄMMPLATTEN, VERFAHREN ZUR HERSTELLUNG SOLCHER DÄMMPLATTEN MIT DIESER VORRICHTUNG, SO HERGESTELLTE DÄMMPLATTEN UND VERWENDUNG DAVON
DISPOSITIF POUR L'OBTENTION DE PANNEAUX ISOLANTS, PROCÉDÉ POUR L'OBTENTION DE TELS PANNEAUX ISOLANTS, PANNEAUX ISOLANTS AINSI OBTENUS ET LEUR UTILISATION

(30) Priority: 08.02.2022 IT 202200002288
(43) Date of publication of application: 16.08.2023
(73) Proprietor: Politop s.r.l., 31040 Meduna di Livenza (TV) (IT)
(72) Inventor: Cester, Renzo, 31045 Motta di Livenza (IT)
(74) Representative: Frare, Paolo

(56) References cited:
- EP-A2- 2 172 598
- AT-A4- 506 068

## Description

The invention concerns an apparatus for obtaining insulation panels for buildings, to a process for obtaining such insulation panels by means of such apparatus, to the insulation panels so obtained. At present, several insulating panels, made with one or more layers of expanded polystyrene, are manufactured for been applied of outer walls of buildings, preferably of the inhabited type, for obtaining a so-called external wall insulation system.

Some of these insulating panels have transversal through holes adapted to let pass outside the condensation generated inside the walls of buildings.

For obtaining such insulating panels there are used molding means constituted by a first fixed half mold, comprising an internal chamber provided with a plurality of metallic needles fixed at one end portion thereof and turned toward the second half-mold, said second half-mold being of the movable type and being provided with guiding through holes, arranged in correspondence to and directed toward the free end portion of said needles.

The second half-mold moves linearly toward the first half-mold up to that the needles enter in the respective through holes, after said internal chamber is filled up with grains of expanded polystyrene, which is then sintered, causing that the granules aggregate to each other obtaining so an insulating panel provided with transversal through holes adapted to be applied on walls of building that must be thermal insulated.
for obtaining insulating panels over a certain thickness and with transversal through holes perfectly parallel to each other is basically impossible, because the needles are very long and must have a section with a reduced diameter, as for example smaller than or equal to 5 mm.

Just think of needles with such reduced diameters and with a length greater than 200 mm.

Furthermore, there is the risk that the needles don't couple correctly with the respective through holes, so that the mold being damaged and/or the insulating panel is molded in a wrong way.

Furthermore, for be able to realize insulating panels with different thickness, it is compulsory to use half-molds with internal chambers having different depths and needles with a length adequate with respect to such a depth depending on the thickness of the insulating panel to be obtained, and this involves the construction of a plurality of half-molds with chambers having different dimensions.

The prior document AT506068A4 discloses a tool for manufacturing plastics, in particular constituted by a block form for producing perforated insulation panels. Said block form comprises walls defining a cavity, a first closable opening that enables a block to be discharged and further several closable openings for supplying expandable material, an expanding agent, in particular water vapor, and for connecting a vacuum source and said cavity.

Said cavity is penetrated by needles when the block form is closed.

A movable needle holding plate is displaceable outside the block form and the wall of the block form adjacent to said needle-holding plate is provided with guide holes, provided for each said needle.

A needle receiving plate is located within the block form, which is provided with bores for receiving the free ends of said needles and is displaceable over the entire extent of said cavity.

The size of the needle receiving plate corresponds to the cross section of the cavity of the block form.

Said needles and the corresponding bores of the needle receiving plate are aligned with said guide holes.

The object of the present invention is to realize an apparatus having constructive characteristics different to the ones known from the prior art and that solves the relative above described problems and introduces additional advantages specified in the following description.

Furthermore, this invention concerns also an innovative process for obtaining such insulating panels, by means of the above said apparatus, and the insulating panels so obtained.

Following, there are described first the structural characteristics of the used apparatus, object of the present invention, then the steps of the process for obtaining the insulating panels and the insulating panel so obtained.

The invention will be understood by the following description, by way of a not-limitative example only and with reference to the accompanying drawings, in which :
- Fig. 1 shows a side view of a first example of embodiment of the apparatus used for obtaining insulating panels, in a first operating position thereof, according to the invention ;
- Fig. 2 shows a side view of the two component elements that constitute the apparatus of Fig. 1, separated to each other ;
- Fig. 3 shows a perspective view from the top of a first component element of Fig. 2 ;
- Fig. 4 shows a perspective view from below of the first component element of Fig. 2 ;
- Fig. 5 shows a view from below of the first component element of Fig. 2 ;
- Fig. 6 shows a side cross-section of the component element shown in Fig. 5 ;
- Fig. 7 shows a perspective view from below of the second component element of fig. 2 ;
- Fig. 8 shows a perspective view from the top of the second component element of Fig. 2 ;
- Fig. 9 shows a perspective view of an enlarged detail of fig. 8 ;
- Fig. 10 shows a view from below of the second component element of fig. 2 ;
- Fig. 11 shows a view from the top of the second component element of fig. 2 ;
- Fig. 12 shows a longitudinal cross-section of the component element of fig. 11 ;
- Fig. 13 shows a transversal cross-section of the component element of fig. 11 ,
- Fig. 14 shows a perspective view from below od the second component element in a second operating position thereof ;
- Fig. 15 shows a perspective view from the top of the component element of Fig. 14 ;
- Figures 16, 17 and 18 respectively show a side view, a view from the top and a longitudinal cross-section of this latter of the component element shown in Figures 14 and 15 ;
- Fig. 19 shows a transversal cross-section of the component element of Fig. 17 ;
- Fig. 20 shows a first step of the process for obtaining insulating panels by means of the apparatus shown in Fig. 1 ;
- Fig. 21 shows a second step of the process for obtaining insulating panels by means of the apparatus shown in Fig. 1 ;
- Fig. 22 shows a third step of the process for obtaining insulating panels by means of the apparatus shown in Fig. 1 ;
- Fig. 23 shows a fourth step of the process for obtaining insulating panels by means of the apparatus shown in Fig. 1 ;
- Fig. 24 shows a fifth step of the process for obtaining insulating panels by means of the apparatus shown in Fig. 1 ;
- Fig. 25 shows a sixth step of the process for obtaining insulating panels by means of the apparatus shown in Fig. 1 ;
- Fig. 26 shows a seventh step of the process for obtaining insulating panels by means of the apparatus shown in Fig. 1 ;
- Fig. 27 shows a side stylized view of a second example of embodiment of the apparatus, according to the invention .

The present invention concerns an apparatus for obtaining insulating panels by means of a specific innovative process.

Such obtained insulating panels are intended for the building field and in particular to be applied to inner and/or outer walls, roofs, windowsills, cavities of buildings of various kind, as for example houses, commercial buildings, etc., for thermal insulation of them.

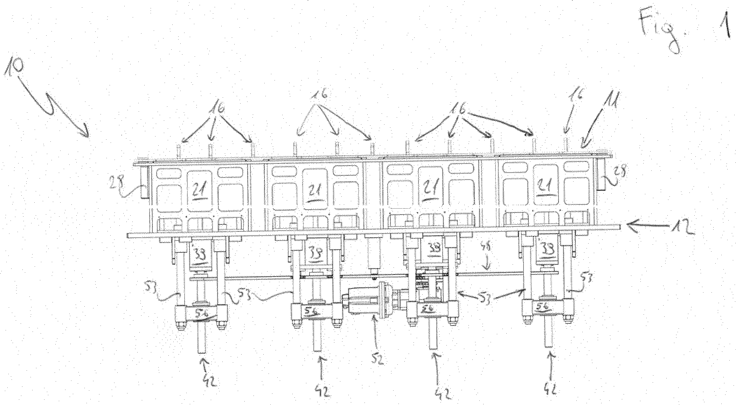

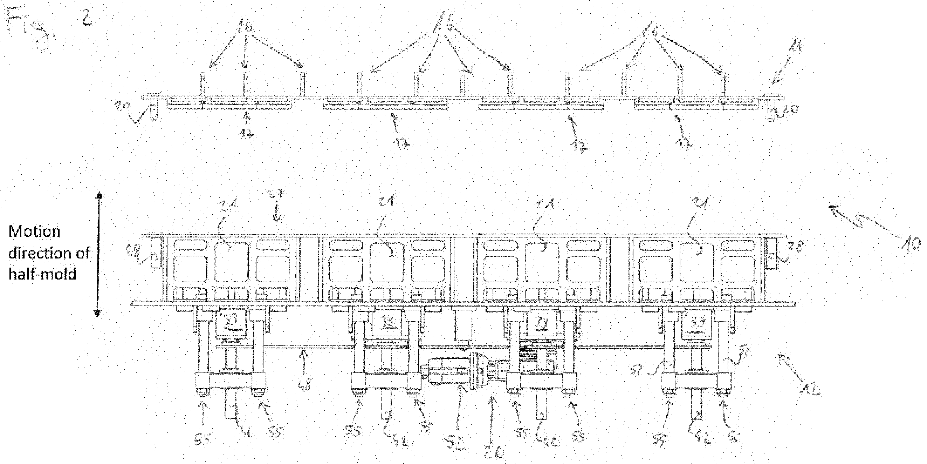

The apparatus shown in the enclosed figures is intended for obtaining simultaneously four insulating panels, but how easy it will be understood by the skilled person in the field, it will be possible to size and to configure such an apparatus for obtaining both a single insulating panel and several insulating panels.
said apparatus 10, as shown particularly in Figures 1, 2 and 27, is constituted by at least a first mold comprising two half-molds 11 and 12 provided respectively with operating areas 13 and 14, able to be coupled to each other.

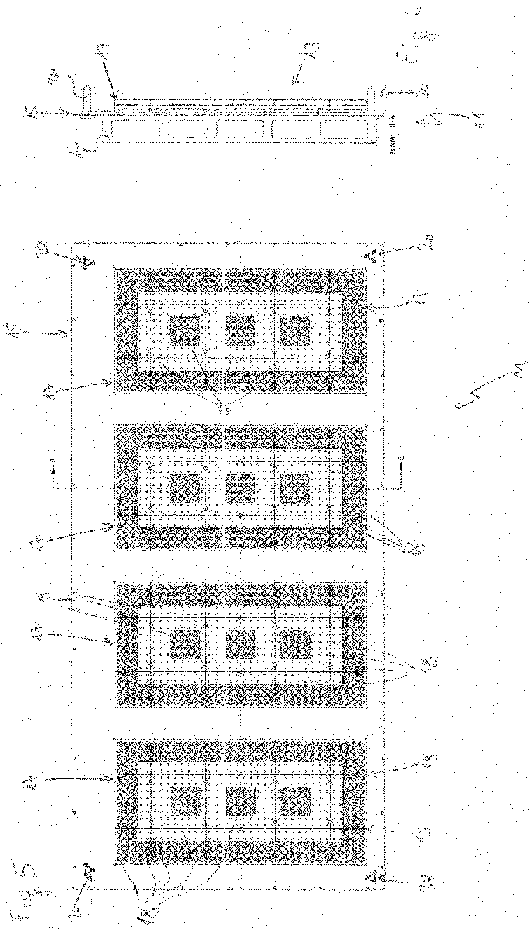

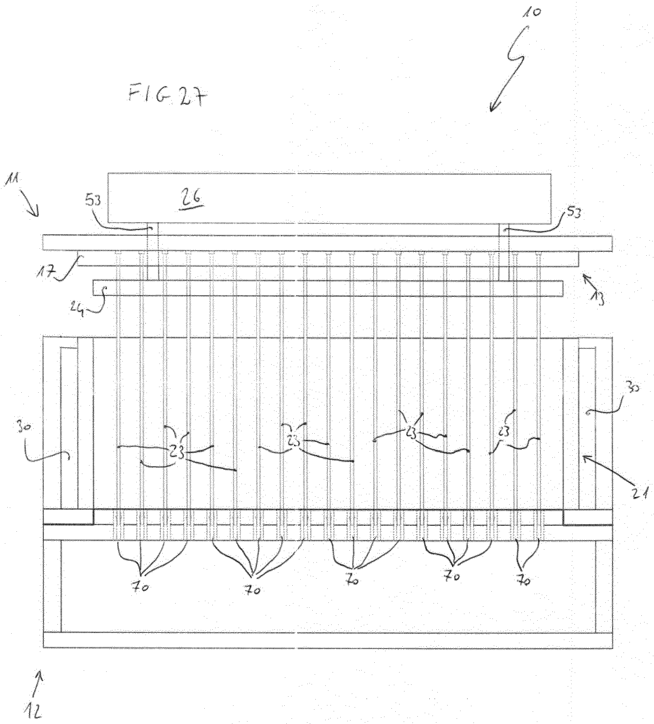

Figures 1-9 show a first example of embodiment of the apparatus 10, whereas Fig. 27 shows schematically a second example of embodiment of said apparatus 10.

said two half-molds 11 and 12 are adapted to be installed, with fixing methods of the per se known type, in a pressing means (not shown), horizontally or vertically one with respect to the other and with said operating areas 13 and 14 faced to each other, in such a way that at least one a of said half-molds, of the movable type, may be moved linearly by linear moving means of said pressing means, in approaching and in receding with respect to the other stationary second half-mold.

Preferably, said half-molds 11 and 12 are arranged vertically one with respect to the second one, and the one in the lower position is movable vertically, whereas the one in the upper position is stationary.

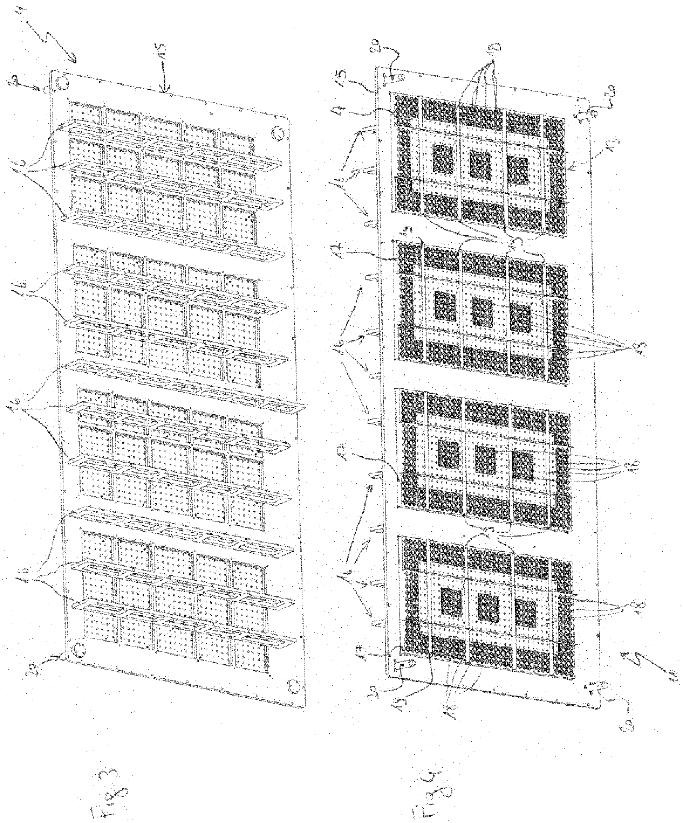

Figures 3-6 shows an example of first half-mold 11, that results to be the stationary one, and particularly it constitute the male part.

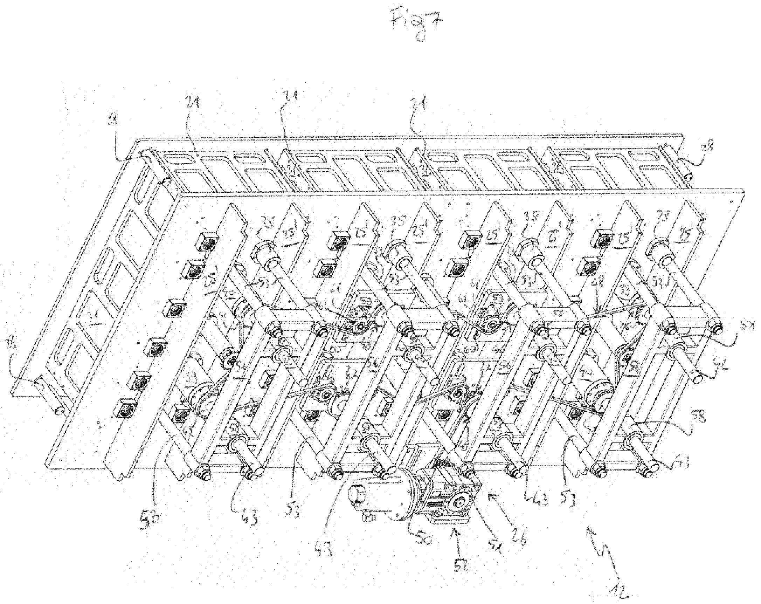

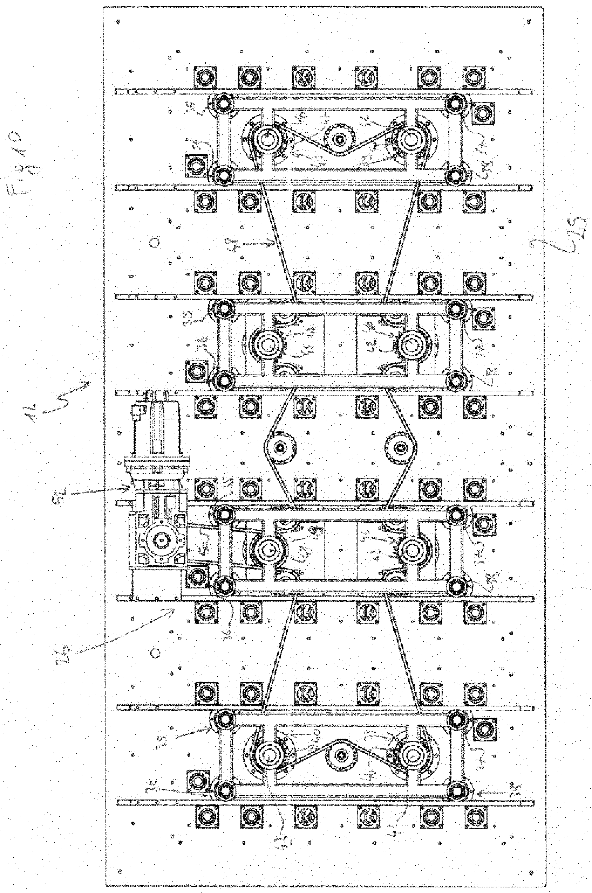

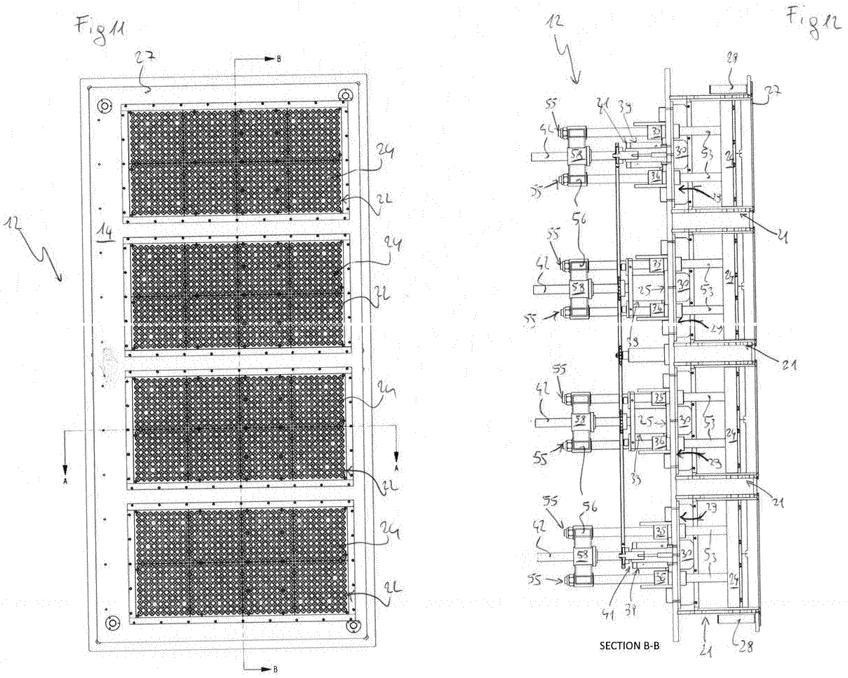

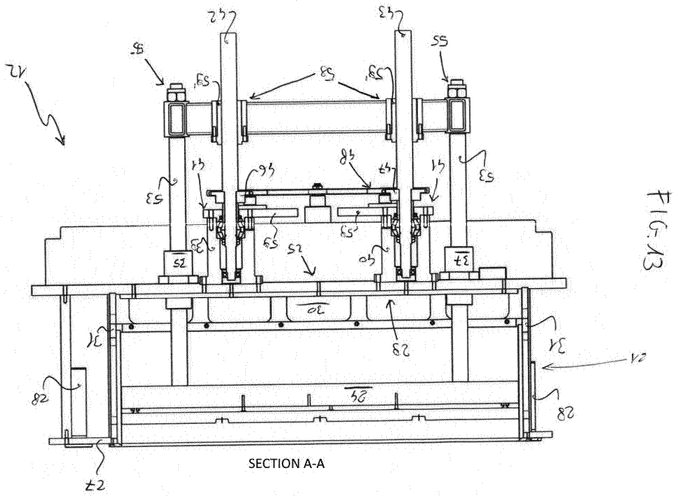

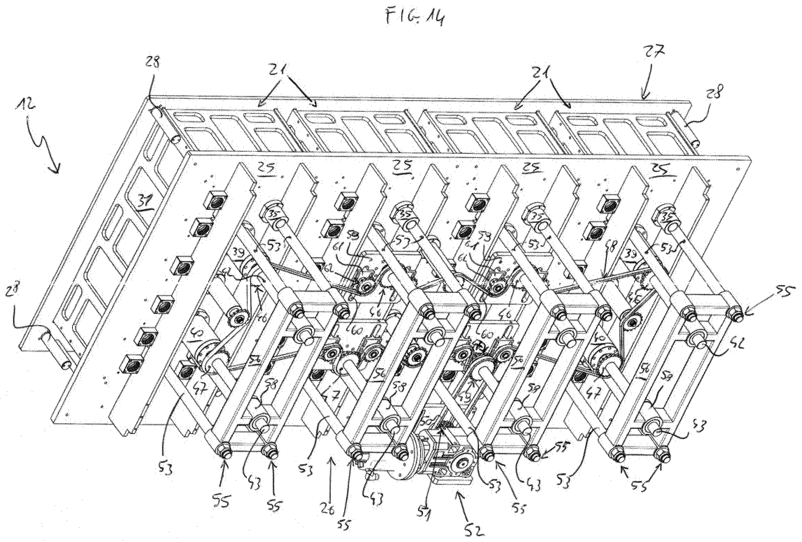

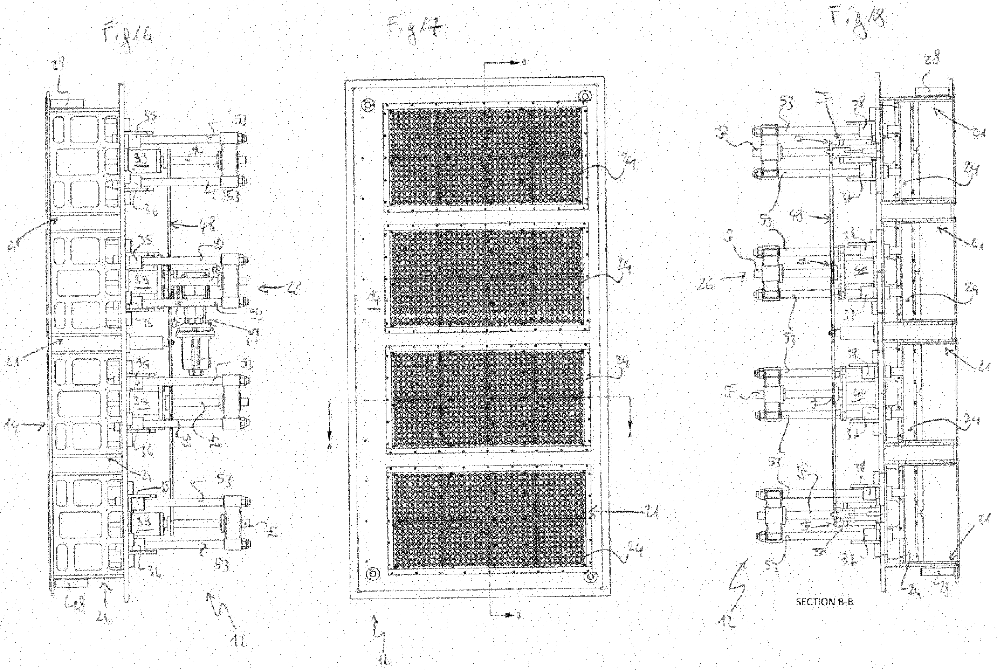

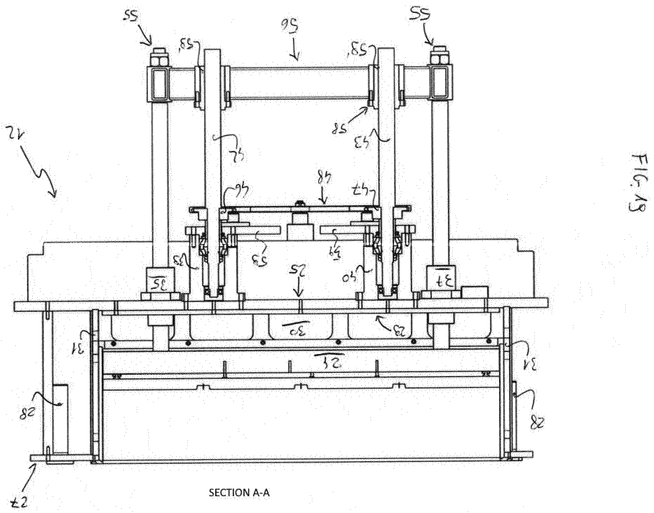

Figures 7-19 shows an example of second half-mold 12, that results to be the linearly movable one, and particularly is constitute the female part.

Said first half-mold 11 has a flat elongated portion 15, preferably with a rectangular base, on the lower part thereof it is provided with the operating area 13, whereas on the upper part thereof it is provided with structural reinforcing elongated elements 16 of the per se known type and with a box-like casing 71, having an equivalent area for shape and dimensions with respect to the ones of the flat elongated portion 15 for forming a chamber 72.

Said chamber 72 is connected to and communicating with first suction means of the per se known type (not shown), adapted to keep the panel in position on the first half-mold 11.

The operating area 13 comprises centrally at least a first flat raised portion 17 with quadrangular base, preferably rectangular, in turn provided, for the entire surface thereof, with a plurality of holes 18, of the through or blind type, spaced away and parallel to each other and with raised walls 19, arranged orthogonally between said hole 18 and forming quadrangular areas.

As already mentioned, in the exampled shown in the attached drawings, there are present four flat raised portions 17 joined in a parallel way and spaced to each other, but they may be in a different number, from at least one.

Said operating area 13 is provided at each vertex thereof at least with a rectilinear elongated element (20), as for example a pin, extended orthogonally to the same operating area 13.

The second half-mold 12 is constituted by at least a tub 21 with quadrangular base, preferably rectangular, with an upper opening 22 and equipped inside with a plurality of elongated bodies 23, as for example needles, rods and preferably with a circular section, which are arranged spaced away and parallel to each other and fixed, with one end portion thereof, to the internal bottom 29 of the same tub 21 and are extended at least in the direction of the depth of this latter up to said upper opening 22.

One additional movable body 24 is also housed inside the tub 21, which movable body 24 has a parallelepiped shape and is provided with a plurality of through holes, parallel to each other, spaced away and seized for the passage of said elongated bodies 23, said movable body 24 being sliding linearly in the depth direction of the tub 21 and being sized with a base such to fill almost completely its traversal section.

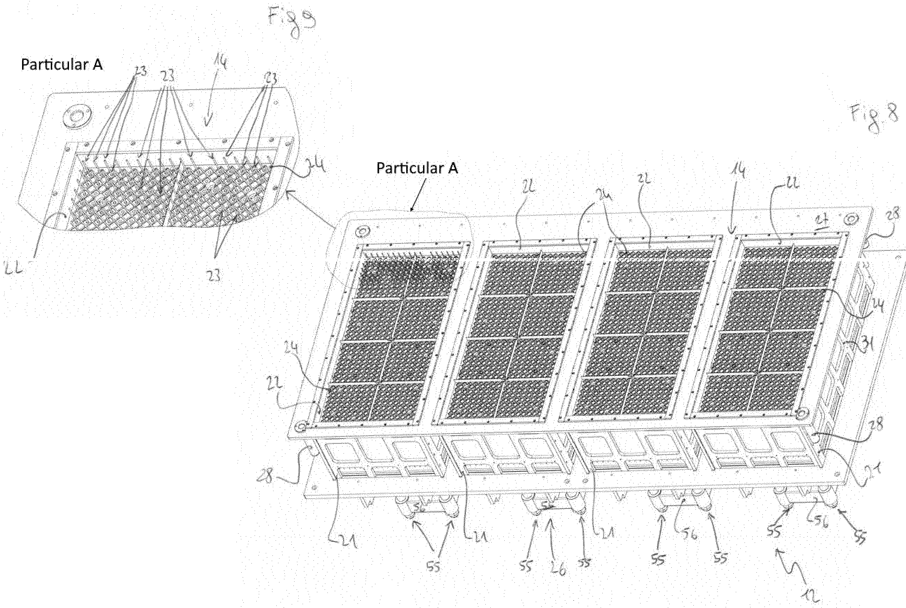

In the attached Figures, the elongated bodies 23 of the second half-mold 12 are shown for a part thereof only and only in the fig. 9, that shows a portion of the same second half-mold 12, in such a way to not create confusion to the reader with to much elements, but such elongated bodies are present in correspondence of all the surfaces of each tub 21 and are attributable with the through holes of the movable body 24, shown in its wholeness.

Said tub 21 is provided outside its lower part 25 with structural reinforcing elements 25' of the per se known type and with at least a linear motion system 26, which is associated with said movable body 24 and is adapted to move linearly this latter inside the same tub 21, in the depth direction thereof.

Said tub 21 is also provided with an outer flat peripheral edge 27 in correspondence of the upper opening 22, which has basically the same shape and dimensions of the flat raised portion 17 of the first half-mold 11, that is it has a quadrangular shape, preferably rectangular, also the peripheral edge 27 being provided at each vertex thereof with at least a elongated hollow element 28, as for example a pipe, elongated orthogonally toward the bottom of the same tub 21.

Said at least hollow element 28 is adapted to be coupled with at least elongated element 20 for maintaining the alignment in approaching between the first and the second half-molds 11, 12. As already mentioned, in the exampled shown in the attached drawings, there are present four tubs 21 joined in a parallel way and spaced to each other, but they may be in a different number, from at least one.

Each half-mold 12 is provided with a peripheral wall 30', as for example a casing, joined between the edge of the lower part 25 and the peripheral edge 27, which peripheral wall 30' being adapted to create a chamber 30 around the tub 21, or the plurality of tubs 21, and to which there are connected and communicating with spraying means of cooling liquid, sintering means (injector of vapor), at least first material introduction means for introducing material of various kind and second suction means, all of the per se known type (not shown).

Each tub 21 present in the apparatus 10 is provided on its side walls 31 with a plurality of micro-holes or micro-splits (not shown) and with a plurality of drains able to be opened or closed by means of valve means, preferably of the electronic type.

Said vapor injecting means are adapted to inject vapor inside the chamber 30, in such a way that the vapor may then enter in each tub 21 through said micro-holes/micro-splits.

Each tub 21 present in the apparatus 10 is provided, on the internal bottom 29 thereof, with additional through holes (not shown) adapted to the sliding passage of the ducts of such a first material introduction means from the chamber 30 in such a way to be fixed with the respective feeding mouth to through holes (not shown) provided on the movable body 24.

Said spraying means of cooling liquid are fixed with their spraying nozzles to the internal bottom 29 and turned inward each tub 21 in a way that said cooling liquid may then enter into each tub 21 through said micro-holes or said micro-splits.

Said movable body 24 has such a stroke that the upper end-stroke thereof allows itself to be placed coplanar with respect to the upper opening 22, whereas the lower end-stroke thereof allows itself to stop in contact with the internal bottom 29 of the tub 21.

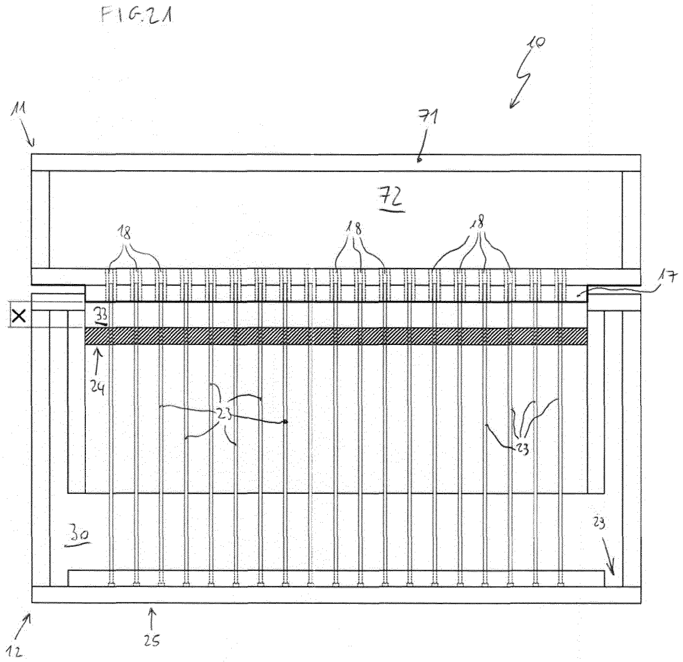

Said second half-mold 12 is adapted to move linearly in approaching and in receding with respect to the first half-mold 11 by means of said pressing means, being able so to couple the respective upper opening 22 and the raised portion 17, opportunely shaped and sized, thereby creating a closed compartment 33 (See Fig. 21), delimited laterally by said side walls 31 of the tub 21, by the upper surface of the movable body 24 and by the lower surface of the first flat raised portion 17, where it is possible to obtain a respective insulating panel, object of the present invention.

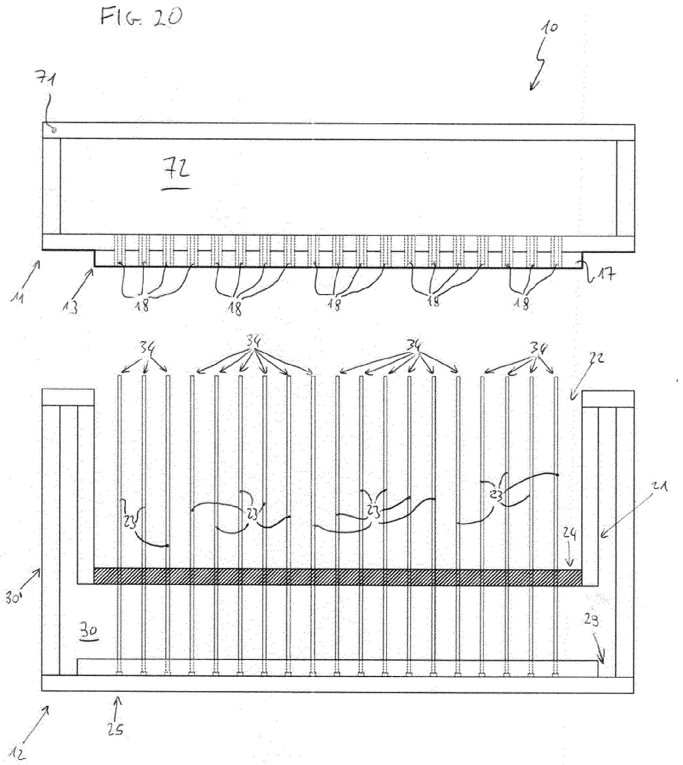

Said movable body 24 may be advantageously moved by means of the linear motion system 26 close to the upper opening 22, leaving free only a portion of the free end portions 34 (See Fig. 20) of the elongated bodies 23, thereby maintaining these latter completely parallel to each other and perpendicular with respect to the internal bottom 29 of the tub 21, in this way during the coupling of the upper opening 22 and the raised portion 17, it is avoid the risk that the free end portions 34 collide with the raised portion 17 and instead it is allowed that the same end portions 34 may be coupled adequately with the holes 18.

Said movable body 24 may be advantageously moved later toward the internal bottom 29 of the tub 21, spacing away from the lower surface of the raised portion 17 of a distance equal to thickness of the layer of insulating panel that must be obtained, by moving again toward the internal bottom 29 of additional desired distances, it is possible to create additional layer of the desired thickness joined to the layer already obtained.

Such steps will be described more in detail following, but we can understand immediately the advantage that we obtain by using a mold for obtaining insulating panels equipped with a movable body 24.

Now, it is described an example of linear motion system 26, which refers always to a mold for manufacturing simultaneously four insulating panels, but may be easily modified to a mold for obtaining a single insulating panel or for a plurality of this latter, because the linear motion system 26 is of the modular type.

The lower part 25 of each tub 21 is provided with a plurality of through holes arranged at pairs parallel and spaced to each other in the transversal direction of the same tub, in which through holes there are inserted and fixed respective vertical hollow guide members 35, 36 and 37, 38, as for example bushings, for the aim that will be described later.

At least two hollow supports 39, 40 are placed 39, 40 between two couples of vertical hollow guide members 35, 36 and 37, 38, and extended outward and opened at the free end portion 41 thereof.

A respective elongated element 42, 43 is inserted with one end portion thereof in each hollow support 39, 40 and locked with fixing means of the per se known type that allow only its rotation and avoid its translation.

Each elongated element 42, 43 is threaded at least partially in the free portion thereof.

For facilitating the rotation of each said elongated element 42, 43, a bearing or a bushing may be inserted in a respective hollow guide body.

Outside the free end portion 41, each elongated element 42, 43 is provided with a first element 46, 47 for transmitting the rotational motion, as for example a gear wheel or a pulley, etc, that is integrally fixed.

Said elements 46, 47 for transmitting the rotational motion are connected to each other by a first connecting element 48, as for example a toothed belt or a chain, etc., adapted to transfer a simultaneous rotational motion between said two elements 46, 47.

At least a second element 49 for transmitting the rotational motion, as for example a toothed belt or a chain, etc. is joined above at least of one of two first elements for transmitting the rotational motion 46 or 47 and is connected, by means of a second connecting element 50, as for example a toothed belt or a chain, etc., to a third element 51 for transmitting the rotational motion, this latter being part of an electrical means 52 for generating rotational motion, as for example an electric motor, fixed always outside on the lower part 25 of the tub 21.

Said electric motor 52 is adapted to rotate the various element for transmitting the rotational motion connected to each other in one direction or in the other one, thus the elongated elements 42 and 43 may rotate in a synchronous way in the same direction.

Elongated elements 53, as for example rods, are each inserted in a sliding way within said vertical hollow guide members 35, 36 and 37, 38 and with the upper end portions thereof are integrally joined to the movable body 24, whereas the lower end portions 55 of each elongated element 53 are joined to each other in an integral way to a frame 56 with quadrangular base, preferably rectangular, this latter being provided with internal extensions, each provided with a body 58 in turn provided with a central threaded through hole 59', placed and sized for being coupled with the threaded portion of a respective elongated element 42, 43.

With this configuration, by actuating the electric motor 52 in one rotating direction or in the other one, the elongated elements 42, 43 rotate in a synchronous way, in the same direction, in such a way that the bodies 58 may slide on these latter in one direction or in the other one, being able to move the movable body 24 in receding or in approaching with respect to the internal bottom 29 of the tub 21, in the depth direction of this latter.

The first elements for transmitting the rotational motion 46, 47 of the various tubs 21 arranged on joined aligned to each other may be joined by means of the connecting means 48, allowing the motion of the movable body 24 of each tub 21 in an equal and synchronous way.

A plate 59 may be placed on each hollow support 43, 40, under the respective element for transmitting the rotational motion 46, 47, which plate 59 being provided with at least a slot 60, in which a support element 61 being inserted and fixed to for supporting a fourth element 62 for transferring the rotational motion, as for example a gear wheel or a pulley, etc., arranged spaced away at the same level of the respective first element 46, 47, on which there is possible to associate said connecting element 48, opportunely sized.

Said support element 61 may be locked in position along said slot 60, in such a way that the connecting element 48 be more or less tensioned according the operational needs.

Additional support elements may be placed and fixed outside the lower part 25 for additional elements for transferring the rotational motion by connecting them to the previous ones, by means of said connecting element 48.

All the electrical and electronic component elements of said apparatus 10, in addition to a to an electric power supply, to an electronic control and command system, as for example an electronic circuit board or a PLC system, adapted to be set for obtaining the step of a process for obtaining a desired insulation panel in an automatic way.

Particularly, such a control and command system associated to the linear motion system 26 is set for determining the length of the advancements of the movable body 24 in one direction or in the other one.

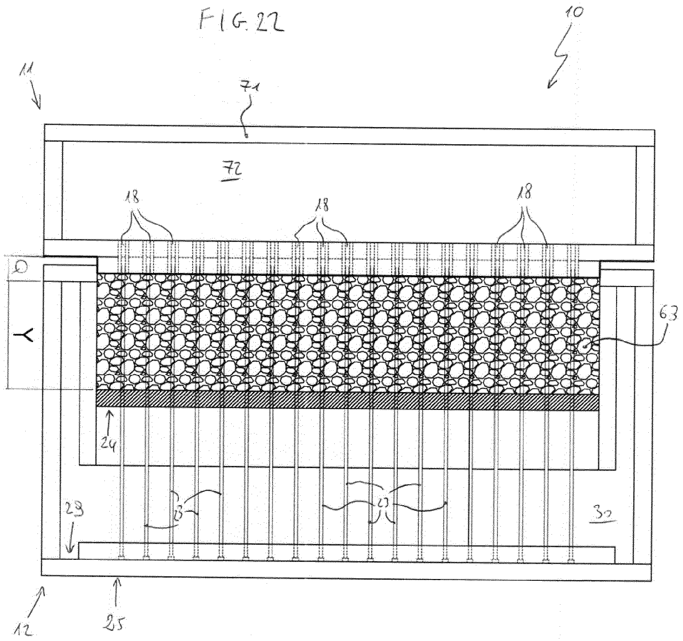

Now it is described one example of the process for obtaining an insulating panel by means the sintering at least of granules of expanded polymers inside the above said apparatus 10, referred particularly to Figures 20-26, that show synthetically the apparatus 10 in the various operating steps thereof.

In the Fig. 20, the apparatus 10 is in a start rest position thereof, that is with the second half-mold 12 moved away from the first half-mold 11, and the movable body 24 is placed in close proximity to the internal bottom 29.

A first step, shown in Figures 8, 9, 12, 13 and particularly in Fig. 21, provides that the movable body 24 is moved in close proximity of the upper opening 22, being positioned inside the tub 21 at a distance X from the same upper opening 22, while the second half-mold 12 is approaching to the first half-mold 11 in such a way that the upper opening 22 is positioned in close proximity of the lower surface of the raised portion 17 of the first half-mold 11 and the elongated bodies 23 are coupled with their free end portions with the same raised portion 17.

In this manner, by having the movable body 24 placed near the free end portions of the elongated bodies 23, these latter result perfectly parallel to each other, thereby avoiding the above said problems.

Furthermore, a vent slot is obtained between the perimeter of the upper opening 22 and the perimeter of the raised portion 17, such a slot being sized in such a way that the material to be sintered inserted in the tub 21 can't go outside.

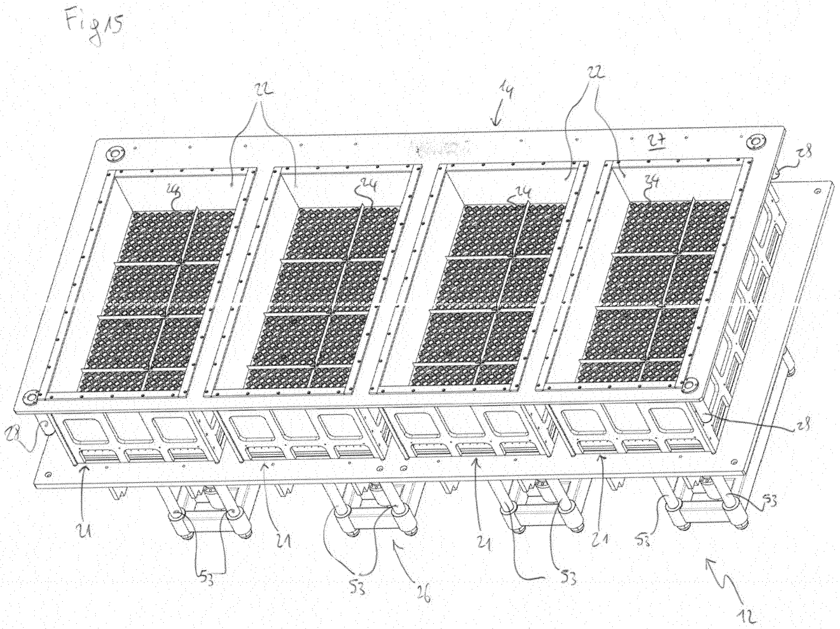

A second step, shown in figures 15-18 and 22, provides that the movable body 24 is moved toward the internal bottom 29 of a pre-determined distance Q+Y from the operating area 13, obtaining an empty space 63. Such a pre-determined distance Y corresponds to the thickness of the layer of insulating panel to be obtained, that corresponds to distance between the surface of the raised portion 17 and the opposed surface of the movable body 24 when the two half-molds 11 and 12 are coupled completely to each other, whereas the pre-determined distance Q is adapted to create said vent slot.

A third step provides the introduction of the material to be sintered, that is a first quantity of granules of expanded polymer, inside the space 63 obtained between the side walls of the tub 21, the movable body 24 and the raised portion 17, letting the air the air contained in the same space 63 go outside through said vent slot, by means said first material introducing means and the extensible ducts to which are connected. Said granules of expanded polymer are introduced in a quantity such to obtain a pre-determined first density depending on the volume of the layer of insulating panel to be obtained.

The expanded polymer of said granules is of the synthetic type, as for example expanded polystyrene, or of the natural type, so-called bio-based foam, that is PLA-based (polylactic acid) or other equivalent materials.

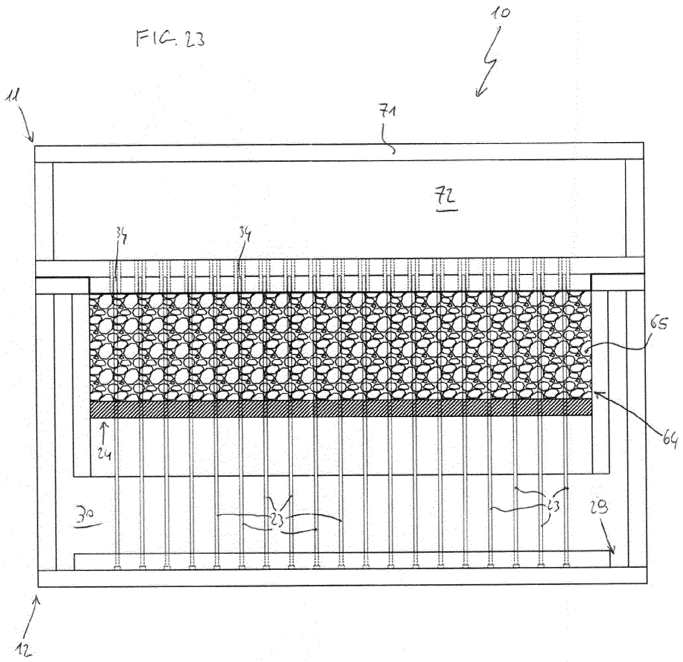

A fourth step, shown in Fig. 23, provides that the second half-mold 12 moves until it abuts against the first half-mold 11, in such a way that the raised portion 17 be coupled with the opening 22, penetrating for the entire height thereof inside the tub 21, and obtaining a closed space 64 having an height extended between the surface of the raised portion 17 and the surface of the movable body 24, corresponding to the pre-determined distance Y, filled with the granules of expanded polymer.

A fifth step provides the sintering of the granules of expanded polymer by means of vapor injected in the chamber 30 through said sintering means, which vapor enters in the tub 21, more particularly in the space 64, through said micro-holes or micro-splits of the walls 31 and the hole of the movable body 24, by sintering the granules of expanded polymer for then being discharged outside through said drains, able to be opened or closed by means of valve means, preferably of the electronic type, a sintered layer 65 being obtained.

A sixth step provide the cooling of the sintered layer 65 down, by means of spraying of cooling liquid, preferably water, on the same layer, liquid injected by means of said suitable spraying means and then drained through said drains, such sixth step providing also a subsequent creation of vacuum inside the chamber 30 and the tub 21, by means of said suitable second suction means, for stabilizing the product up to now obtained, that is the layer 65.

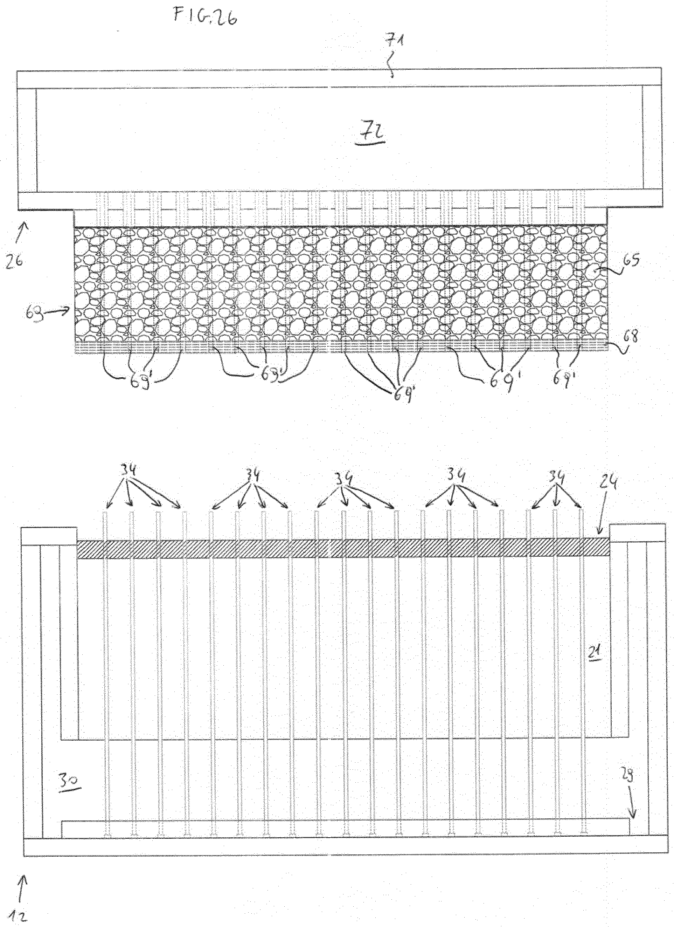

Now, it is possible to proceed with a possible first seventh step, shown in Fig. 26, that is the removal of the layer 65 of sintered expanded polymer granules by means of a handler means after the receding of the second half-mold 12 from the first half-mold 11 of a distance greater than the thickness of the sintered layer 65 obtained. Thereby we have obtained a sintered layer acting as single-layer insulating panel.

Alternatively, if it is necessary to obtain an insulating panel constituted by more layers of sintered granules of expanded polymers, the process provides follow steps.

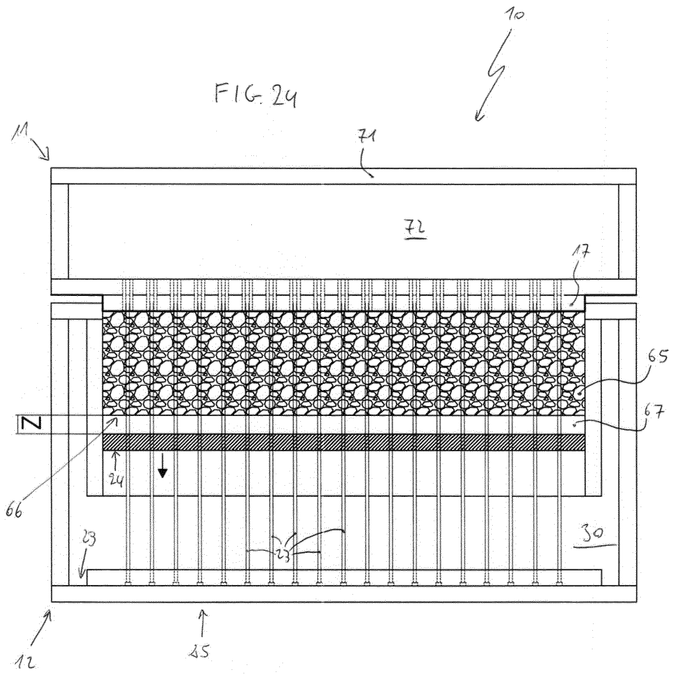

A possible seventh step, shown in fig. 24, provides that the second movable half-mold 12 recedes from the first stationary half-mold 11 up to create again the vent slot, while, with said first suction means connected to the first half-mold 11, the sintered layer 65 obtained is kept in position on the lower surface of the raised portion 17 and the movable body (24) moves of a pre-set distance Z from the lower surface 66 of the sintered layer 65, corresponding to the thickness of the second layer of the insulation panel to be obtained, creating so an empty space 67.

An eighth step provides the introduction of a second quantity a granules of expanded polymers inside the empty space 67, in a quantity such to obtain a sintered layer with a density and/or material different with respect to the ones of the first sintered layer 65, depending on the thickness of the second layer to be obtained, by means of second said material introduction means.

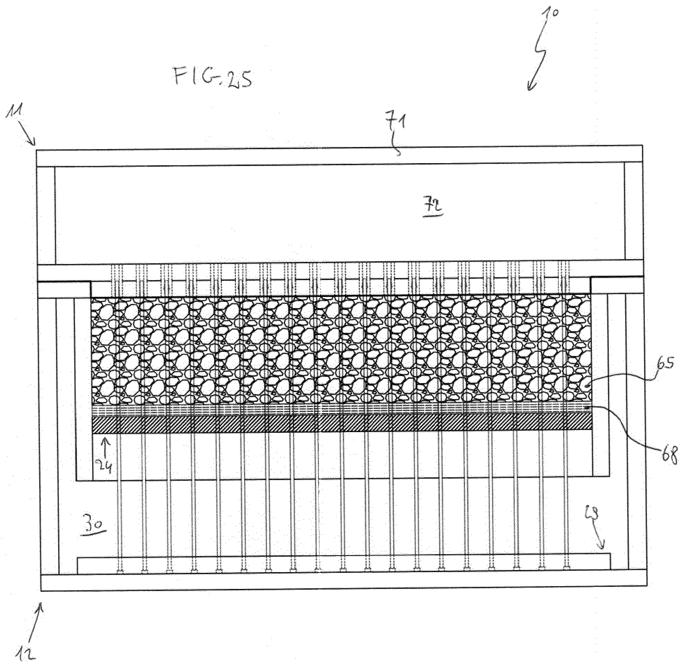

A ninth step, shown in fig. 25, provides that the second movable half-mold 12 moves until it abuts against the first half-mold 11, in such a way that the raised portion 17 couples with the upper opening 22, by penetrating for the entire height thereof inside the tub 21, as in the fourth step.

A tenth step provides the sintering of the second quantity of granules of expanded polymer and its joining with the first quantity of granules of expanded polymer already sintered by means of vapor injected in the chamber 30 through said sintering means, which vapor enters through said micro-holes or micro-splits from the walls 31 and the holes of the movable body 24 in the tub 21 and more particularly in the spaces where the granules to be treated are housed, for then be discharged outside through suitable drains able to opened and closed by means of valve means, preferably of the electronic type.

Thereby it is obtained one additional layer 68 of sintered granules of expanded polymer.

The joining between the first layer 65, already sintered, and the second sintered layer 68, is obtained for melting thanks to the temperature of the injected vapor, thereby allowing to manufacture a multi-layer insulated panel 69 provided with transversal through micro-holes 69', which result parallel to each other.

An eleventh step provide the cooling of the multi-layer insulating panel 69 down, by means of spraying of cooling liquid on the same insulating panel, injected by means of said suitable spraying means and then such a step providing the subsequent creation of vacuum inside the space wherein the insulating panel 69 is contained by means of suitable second suction means, for stabilizing the product until now obtained.

Now, it is possible to proceed with the removal of the multi-layer insulating panel 69 obtained, as in the seventh step, or, if is it necessary to obtain an insulating panel with one or more additional layers, a second seventh step is repeated again.

With the above said process by means of the above said apparatus 10 only, it is possible to obtain at least an insulating panel provided with transversal through micro-holes 69' and constituted by a layer having desired thickness, density and materials, or at least a multi-layer insulating panel provided with transversal through micro-holes 69', whose layers have thickness and/or density and/or material different to each other and are adequately fixed to each other without the use of gluing materials and preserve their individual density and their individual mechanical properties.

For each single layer of insulation panel to be obtained, the relative granules of expanded polymer are previously mixable together with other materials adapted to confer determined physical-mechanical properties, as for example graphite, metallic powder, hard plastic, etc. The lower surface of the raised portion 17 and the upper surface of the movable body 24 may have particular ribs or grooves for obtaining insulating panels with specific surfaces, as for example weakening lines for facilitating the cut or for the detensioning of the panel for preserving its structure during the expansions thereof caused by the changes of the environmental temperature.

The insulating panel has preferably a thickness equal or greater than 200 mm and the transversal through holes 69' have a diameter equal or smaller than 5 mm.

The insulating panel so obtained is adapted to be applied and fixed with per se known type to the walls, roofs, cavities and windowsills of buildings, in such a way these latter are thermally insulated, for being able to be eventually painted or covered with covering elements of the per se known type.

Alternatively, as the Fig. 27 shows schematically, the first half-mold 11 is provided centrally on its operating area 13 with at least a first flat raised portion 17 with quadrangular base, preferably rectangular, and with a plurality of said elongated bodies 23 fixed by means of fixing methods of the per se known type spaced away and parallel to each other and extended perpendicular with respect to the same operating area 13.

Furthermore, a linear motion system 26, conformed and operating as in the first example of embodiment of apparatus 10, is applied outside the first half-mold 11 and is adapted to move linearly a movable body 24 provided with holes for the passage of such elongated bodies 23. Furthermore, such a first half-mold 11 is always provided with the rear chamber 72 that in this case is joined and communicating with said spraying means of cooling liquid, vapor injecting means and material introduction means and second suction means, all of the per se known type (not shown), and having the aims already described.

Said material introduction means are always connected to the holes (not shown) provided on the movable body 24.

The tub 21 is provided on its internal bottom 29 with holes 70, through and/or blind, parallel and spaced away to each other in a way to receive said elongated bodies 23 parallel to each other.

The chamber 30, in this case, is joined and communicating with first suction means of the per se known type (not shown).

The process for obtaining an insulating panel by means of this second example of embodiment of apparatus 10 is identical to the one described above, only that the panel is formed in contact to the internal bottom 29 of the second half-mold 12, distancing the movable body 24 from the same of the desired distance, instead that in contact with the operating surface of the first half-mold 11.

That is, there are created various spaces for obtaining a layer of insulating panel by receding the movable body 24 of the necessary distance from the operating surface of the other half-mold.

## Claims

1. Apparatus (10) for obtaining polymeric-based insulation panels intended for the construction sector and particularly to be applied to inner and/or outer walls, roofs, windowsills, cavities of buildings of various kind, as for example houses, commercial buildings, etc., for thermal insulation of them, said apparatus (10) being constituted by at least a mold comprising two half-molds (11 and 12) provided with respective operating areas (13 and 14), which being able to be coupled to each other by means of linear motion of at least on of said two half-molds (11 or 12), of the movable type, in approaching and in receding with respect to the other stationary second half-mold (11 or 12), the first half-mold (11) constituting the male whereas the second half-mold (12) constituting the female and being shaped at least with one tub (21) with quadrangular base, preferably rectangular, with one opening (22) turned toward the operating area (13) of the first half mold (11), the apparatus (10) also comprising a plurality of elongated bodies (23) therein, as for example needles, rods, which are arranged spaced away and parallel to each other and fixed with an end portion thereof to the internal bottom (17, 29) of a half-mold (11 or 12) and with the other end portion (34) free and are elongated in the direction of said tub (21) depth, whereas the other half-mold (11 or 12) is provided with a plurality of holes (18, 70) spaced away and parallel to each other and each arranged coaxially to a respective elongated body (23), a movable body (24) being housed inside said tub (21) and having the same shape of this latter and sized with such a base for filling almost completely its transversal section, and being provided with a plurality of through holes, parallel to each other and spaced away and sized for the passage of said elongated bodies (23), said movable body (24) being sliding linearly in the direction of said tub (21) depth and being adapted to be placed in close proximity of the free end portions (34) of the elongated bodies (23) for their coupling with the holes (18, 70) and to be moved away from the internal bottom of the half body (11 or 12) provided with the holes (18, 70) for inserting one or more layers of polymeric material to be treated, said apparatus (10) being equipped also at least with a first material introduction means adapted to introduce in the tub (21) polymeric-based material, with injecting means for vapor adapted to sinter said polymeric-based material, first suction means adapted to stabilize the sintered material by means of creation of vacuum, apparatus (10) **characterized in that** the operating area (13) of the first half mold (11) comprises centrally at least a first flat raised portion (17) with quadrangular base, preferably rectangular, adapted to be coupled with said opening (22), wherein the apparatus (10) is equipped also at least with liquid spraying means adapted to cool the sintered material down.

2. Apparatus according to claim 1, **characterized in that** said movable body (24) is associated with a linear motion system (26), which is fixed outside to the half-mold (11 o 12), to whose internal bottom (17, 29), the elongated bodies (23) are joined, said linear motion system (26) being adapted to move linearly said movable body (24) in the direction of the tub (21) depth.

3. Apparatus according to claim 1, **characterized in that** it comprises a plurality of tubs (21) joined parallel and spaced away to each other and a plurality of raised portion (17) in a number and sized in a way to be able to be coupled with said tubs (21).

4. Apparatus according to one of previous claims, **characterized in that** said tub (21) is provided with an outer flat peripheral edge (27) in correspondence of it opening (22), having basically the same shape and sizes of the raised portion (17) of the first half-mold (11) and provided at each vertex thereof at least with a elongated hollow element (28), as for example a pipe, extended orthogonally toward the bottom of the same tub (21), whereas said operating area (13) is provided at each vertex thereof at least with a rectilinear elongated element (20), as for example a pin, extended orthogonally to is, each hollow element (28) and each rectilinear elongated element (20) being adapted to be coupled for maintaining the alignment in approaching between the first and the second half-molds (11 and 12).

5. Apparatus according to claim 2, **characterized in that** the bottom of each tub (21) is provided with a plurality of through holes, in which respective vertical hollow guide members (35, 36 and 37, 38) are inserted and fixed to, as for example bushings, said linear motion system (26) comprising at least two hollow supports (39, 40), elongated outward, opened at the end portion (41) thereof and placed between pairs of vertical hollow guide members (35, 36 and 37, 38), and in which two hollow supports (39, 40) a respective elongated rotating element (42, 43) being inserted with and end portion thereof and locked in translation, furthermore this latter being threaded at least partially in the free portion thereof and being provided integrally in the free end portion (41) with a first element (46, 47) for transmitting the rotational motion, as for example a gear wheel or a pulley, etc., said elements (46, 47) for transferring the rotational motion being connected to each other by a first connecting element (48), as for example a toothed belt or a chain, etc., adapted to transfer a simultaneous rotational motion between said two elements (46, 47), a second element (49) for transferring the rotational motion being positioned on the upper part of at least one of these latter, as for example a gear wheel or a pulley, etc. connected by means of a second connecting means (50), as for example a toothed belt or a chain, etc., to a third element (51) for transferring the rotational motion, being part of an electrical means (52) for generating rotational motion, this latter being adapted to rotate the various elements for transferring the rotational motion joined to each other in one direction or in the other one, therefore the elongated elements (42 and 43) may rotate in a synchronous way in the same direction, additional elongated elements (53), as for example rods, being each inserted in a sliding way in said vertical hollow guide members (35, 36 and 37, 38) and with a upper end portion thereof being joined integrally to the movable body (24), whereas the lower end portions (55) of each said elongated element (53) being joined to each other in an integral way by a frame (56) with quadrangular base, preferably rectangular, this latter being provided with internal extensions each provided in turn with a body (58) provided with a central threaded through hole (59'), placed and sized for being able to be coupled with the threaded portion of a respective elongated element (42, 43), with this configuration, by activating the electrical means (52) in one direction on in the other one, the elongated elements (42, 43) rotates in a synchronous way, in the same direction, in such a way that the bodies (58) may slide on these latter in one direction on in the other one, being able to move the movable body (24) in receding or approaching with respect to the internal bottom (17, 29), in the direction of the tub (21) depth.

6. Apparatus according to claim 5, **characterized in that** said first elements (46, 47) for transferring the rotational motion, associated to a plurality of tubs (21) arranged adjacent to each other, are joined to each other by means of the connecting element (48) for moving the movable bodies (24) of each tub (21) in an equal and synchronous way.

7. Apparatus according to claim 6, **characterized in that** a plate (59) is positioned on each hollow support (39, 40), under the respective element 46, 47) for transferring the rotational motion, and is provided at least with a slot (60), in which a support element (61) is inserted and fixed to, and is adapted to support a fourth element (62) for transferring the rotational motion, as for example a gear wheel or a pulley, etc., arranged spaced away at the same level of the respective first element (46, 47) for transferring the rotational motion, on which it is possible to associate said connecting element (48), said support element (61) being adapted to be locked in position along the entire slot (60) for tensioning opportunely the connecting element (48).

8. Apparatus according to claim 1, **characterized in that** each half-mold (12) is provided with a peripheral wall (30'), as for example a casing, joined between the edge of the external lower part (25) and the peripheral edge (27), which peripheral wall is adapted to create a chamber (30) around the tub (21) and to which there are connected and communicating with said material introduction means, said injecting means for vapor, said liquid spraying means adapted to cool the sintered material down and said first suction means adapted to stabilize the sintered material by means of creation of vacuum, each tub (21) present in the apparatus (10) being provided on its side walls (31) with a plurality of micro-holes or micro-splits adapted for the passage of the vapor, the cooling liquid and the air produced by the above-said means, said movable body (24) being provided with through holes for inserting the polymeric-based material inside the respective tub (21), said linear motion system (26) being joined to said external lower part (25).

9. Apparatus according to claim 8, **characterized in that** said first half-mold (11) has on its upper part a chamber (72), formed by a box-like casing (71), which is connected to and communicating with second suction means of the per se known type, adapted to keep the panel in position on the same first half-mold (11).

10. Apparatus according to claim 1, **characterized in that** said first half-mold (11) has on its upper part a chamber (72), formed by a box-like casing (71), which is connected to and communicating with said material introduction means, said injecting means for vapor, said liquid spraying means adapted to cool the sintered material down and said first suction means adapted to stabilize the sintered material by means of creation of vacuum, each tub (21) present in the apparatus (10) being provided on its side walls (31) with a plurality of micro-holes or micro-splits adapted for the passage of the vapor, the cooling liquid and the air produced by the above-said means and a plurality of drains, which are able to be opened and closed by means of valve means, preferably of the electronic type, adapted to drain out vapor and liquids, said movable body (24) being provided with through holes for introducing polymeric-based material inside the respective tub (21), said linear motion system (26) being joined to said external lower part of the first half-mold (11).

11. Apparatus according to claim 10, **characterized in that** each half-mold (12) is provided with a peripheral wall (30'), as for example a casing, joined between the edge of the external lower part (25) and the peripheral edge (27), which casing is adapted to create a chamber (30) around the tub (21), to which second suction means of the per se known type are joined to and communicating with, adapted to keep the panel in position on the same half-mold (12).

12. Apparatus according to one or more of previous claims, **characterized in that** the electric and electronic component elements of said apparatus (10) are able to be connected, in addition to an electric power supply, to an electronic control and command system, as for example an electronic circuit board or a PLC system, adapted to be set for obtaining the steps of a process for obtaining a desired insulation panel in an automatic way.

13. Apparatus according to claim 12, **characterized in that** such a control and command system associated to the linear motion system (26) is set for determining the length of the advancements of the movable body (24) in one direction or in the other one.

14. Process for obtaining an insulation panel using the apparatus (10) according to one or more claims 1-13, and using material made of granules of expanded polymers and comprising the following steps:
a. positioning of the movable body (24) in close proximity of the free end portions (34) of the elongated bodies (23) and approaching of the second half-mold (12) to the first half-mold (11) up to the free end portions (34) are coupled with the holes (18, 70) of the internal bottom (17, 29) of the opposed half-mold (11 or 12) and by leaving a vent slot between the perimeter of the upper opening (22) and the perimeter of the raised portion (17) ;
b. moving of the movable body (24) of a pre-determined distance toward the internal bottom (17, 29) of the half-mold (11 or 12) to which is joined, with respect to the surface of the opposed internal bottom (17, 29) obtaining so an empty space (63) ;
c. introducing, by means of said first material introduction means, at least of the granules of expanded polymer to be sintered inside the empty space (63), while the air contained in this latter goes out through said vent slot, said granules of expanded polymer being introduced in such a quantity for obtaining a first density depending on the volume of the layer of insulation panel to be obtained ;
d. moving of the half-mold (12) until it abuts against the first half-mold (11) for coupling the raised portion (17) with the opening (22) and obtaining a closed space (64) filled with the granules of expanded polymer and having an height corresponding to the thickness of the layer of insulation panel to be obtained ;
e. sintering of the granules of expanded polymer by means of vapor injected in the chamber (30) through said sintering means obtaining a sintered layer (65), said vapor entering through said micro-holes or micro-splits of the walls (31) end the holes of the movable body (24) in the tub (21) and more particularly in the space (64), sintering the granules of expanded polymer for then being drained outside through said drains ;
f. cooling the sintered layer (65) down by means of spraying of cooling liquid, preferably water, on the same layer, liquid injected by means of said spraying means and then drained by means of said drains ;
g. stabilizing the sintered layer (65), by means the creation of vacuum inside the chamber (30) and the tub (21) through said suitable first suction means ;
h. receding of the movable half-mold (12),
h1. removing of the sintered layer (65) acting as single-layer insulation panel or
h2. for obtaining a multi-layer insulation panel, the movable half-mold (12) recedes from the first half-mold (11) up to create again the vent slot, while the first suction means keeps in position the sintered layer (65) and the movable body (24) moves of a pre-set distance (Z) from the lower surface (66) of the sintered layer (65), corresponding to the thickness of the second layer of the insulation panel to be obtained, creating so an empty space (67) ;
i. after said sub-step h2., introducing of at least a second quantity of granules of expanded polymer inside the empty space (67), in such a quantity to be able to obtain a sintered layer with density and/or material different with respect to the ones of the first sintered layer (65), depending on the thickness of the second layer to be obtained, by means of second material introduction means ;
j. after said step i., moving of the half-mold (12) until it abuts against the first half-mold (11) for coupling the raised portion (17) with the opening (22) ;
k. after said step j., sintering of the second quantity of granules of expanded polymer and joining by melting with the first sintered layer (65) by means of vapor injected through said sintering means, for being then drained outside through said drains, obtaining so a multi-layer insulation panel (69) with two sintered layers (65, 68) joined to each other ;
l. after said step k., cooling the multi-layer insulation panel (69) down by means of spraying of cooling liquid, injected by means of said suitable spraying means and then drained through said drains ;
m. after said step 1., stabilizing the multi-layer insulation panel (69), by means the creation of vacuum by means of said suitable first suction means ;
n. after said step m., repeating of said step h., then removing of the multi-layer insulation panel obtained or creation of an additional layer based at least on granules of expanded polymer and joining of it to the multi-layer insulation panel obtained until now by using again said steps h2-m.

15. Process according to claim 14, **characterized in that** the expanded polymer of said granules is of the synthetic type, as for example expanded polystyrene, or of the natural type, so-called bio-based foam, that is PLA-based (polylactic acid) or other equivalent materials.

16. Process according to claim 15, **characterized in that** for each single layer of insulation panel to be obtained, the relative granules of expanded polymer are previously mixable together with other materials adapted to confer determined physical-mechanical properties, as for example graphite, metallic powder, hard plastic, etc.

17. Insulation panel obtained by means of the sintering of more layers of granules of expanded polymers according to the process of claims 14-16, provided with transversal through micro-holes (69') parallel to each other and each own layer having pre-determined thickness, density and materials, **characterized in that** said layers are joined to each other without the use of adhesive materials.

18. Insulation panel according to claim 17, **characterized in that** is has a thickness also greater than 200 mm and the transversal through holes (69') has a thickness equal or smaller than 5 mm.

## Patentansprüche

1. Vorrichtung (10) zur Herstellung von Dämmplatten auf Polymerbasis, die für den Bausektor bestimmt sind und insbesondere an Innen- und/oder Außenwänden, Dächern, Fensterbänken, Hohlräumen von Gebäuden verschiedener Art, wie z.B. Häusern, Geschäftsgebäuden usw., angebracht werden sollen, zur thermischen Isolierung derselben, wobei die Vorrichtung (10) aus mindestens einer Form besteht, die zwei Halbformen (11 und 12) mit entsprechenden Arbeitsbereichen (13 und 14) umfasst, die durch eine lineare Bewegung mindestens einer der beiden Halbformen (11 oder 12) die beweglich sind, indem sie sich der anderen stationären zweiten Halbform (11 oder 12) annähern und von ihr entfernen, wobei die erste Halbform (11) die männliche Form und die zweite Halbform (12) die weibliche Form bildet und mindestens mit einer Wanne (21) mit viereckigem, vorzugsweise rechteckigem Boden und einer Öffnung (22) ausgebildet ist, die zum Arbeitsbereich (13) der ersten Halbform (11) hin ausgerichtet ist, wobei die Vorrichtung (10) außerdem umfasst
eine Vielzahl von langgestreckten Körpern (23) darin, wie zum Beispiel Nadeln, Stäbe, die beabstandet und parallel zueinander angeordnet und mit einem Endabschnitt davon am inneren Boden (17, 29) einer Halbform (11 oder 12) befestigt sind und mit dem anderen Endabschnitt (34) frei sind und in Richtung der Tiefe der Wanne (21) langgestreckt sind, während die andere Halbform (11 oder 12) mit einer Vielzahl von Löchern (18, 70) versehen ist, die voneinander beabstandet und parallel zueinander sind und jeweils koaxial zu einem entsprechenden langgestreckten Körper (23) angeordnet sind, wobei ein beweglicher Körper (24) im Inneren der Wanne (21) untergebracht ist und die gleiche Form wie diese letztere hat und mit einer solchen Basis bemessen ist, um ihren Querschnitt fast vollständig auszufüllen, und mit einer Vielzahl von Durchgangslöchern versehen ist, die parallel zueinander und voneinander beabstandet und für den Durchgang der langgestreckten Körper (23) bemessen sind, wobei der bewegliche Körper (24) linear in Richtung der Tiefe der Wanne (21) gleitet und dazu geeignet ist, in unmittelbarer Nähe der freien Endabschnitte (34) der länglichen Körper (23) für deren Verbindung mit den Löchern (18, 70) angeordnet zu werden und vom inneren Boden des mit den Löchern (18, 70) versehenen Halbkörpers (11 oder 12) wegbewegt zu werden, um eine oder mehrere Schichten des zu behandelnden Polymermaterials einzuführen, wobei die Vorrichtung (10) auch mit mindestens einem ersten Materialeinführungsmittel ausgestattet ist, das geeignet ist, Material auf Polymerbasis in die Wanne (21) einzuführen, mit Dampfeinspritzmitteln, die geeignet sind, das Material auf Polymerbasis zu sintern, mit ersten Absaugmitteln, die geeignet sind, das gesinterte Material durch Erzeugung von Vakuum zu stabilisieren, wobei die Vorrichtung (10) **dadurch gekennzeichnet, dass** der Arbeitsbereich (13) der ersten Formhälfte (11) in der Mitte mindestens einen ersten flachen, erhöhten Abschnitt (17) mit viereckiger, vorzugsweise rechteckiger Basis umfasst, der mit der Öffnung (22) verbunden werden kann, wobei die Vorrichtung (10) auch mindestens mit Flüssigkeits-Sprühmitteln ausgestattet ist, die das gesinterte Material abkühlen können.

2. Vorrichtung nach Anspruch 1, **dadurch gekennzeichnet, daß** der bewegliche Körper (24) mit einem linearen Bewegungssystem (26) verbunden ist, das außen an der Halbform (11 oder 12) befestigt ist, mit deren innerem Boden (17, 29) die länglichen Körper (23) verbunden sind, wobei das lineare Bewegungssystem (26) geeignet ist, den beweglichen Körper (24) in Richtung der Tiefe der Wanne (21) linear zu bewegen.

3. Vorrichtung nach Anspruch 1, **dadurch gekennzeichnet, dass** sie eine Vielzahl von Wannen (21), die parallel und beabstandet zueinander verbunden sind, und eine Vielzahl von Erhöhungen (17) in einer Anzahl und Größe umfasst, die mit den Wannen (21) verbunden werden können.

4. Vorrichtung nach einem der vorhergehenden Ansprüche, **dadurch gekennzeichnet, dass** die Wanne (21) mit einer äußeren flachen Umfangskante (27) in Übereinstimmung mit ihrer Öffnung (22) versehen ist, die im Wesentlichen die gleiche Form und die gleichen Abmessungen wie der erhabene Abschnitt (17) der ersten Halbform (11) aufweist und an jedem Scheitelpunkt davon zumindest mit einem länglichen hohlen Element (28) versehen ist, wie z.B. ein Rohr, das sich orthogonal zum Boden der gleichen Wanne (21) erstreckt, während der Arbeitsbereich (13) an jedem seiner Scheitelpunkte zumindest mit einem geradlinigen, länglichen Element (20) versehen ist, jedes hohle Element (28) und jedes längliche, geradlinige Element (20) kann gekoppelt werden, um die Ausrichtung zwischen der ersten und der zweiten Halbform (11 und 12) aufrechtzuerhalten.

5. Vorrichtung nach Anspruch 2, **dadurch gekennzeichnet, dass** der Boden jeder Wanne (21) mit einer Vielzahl von Durchgangslöchern versehen ist, in die jeweilige vertikale hohle Führungselemente (35, 36 und 37, 38) eingesetzt und beispielsweise an Buchsen befestigt sind, wobei das lineare Bewegungssystem (26) mindestens zwei hohle Stützen (39, 40) umfasst, die sich nach außen hin erstrecken, an ihrem Endabschnitt (41) geöffnet sind und zwischen Paaren von vertikalen hohlen Führungselementen (35, 36 und 37, 38) angeordnet sind, und in die zwei hohle Träger (39, 40) jeweils ein langgestrecktes Drehelement (42, 43) mit einem Endabschnitt davon eingesetzt und in der Verschiebung blockiert ist, wobei letzteres außerdem zumindest teilweise in seinem freien Abschnitt mit einem Gewinde versehen ist und einstückig in dem freien Endabschnitt (41) mit einem ersten Element (46, 47) zur Übertragung der Drehbewegung, wie z.B. einem Zahnrad oder einer Riemenscheibe, usw. versehen ist, wobei die Elemente (46, 47) zur Übertragung der Drehbewegung durch ein erstes Verbindungselement (48), wie z.B. einen Zahnriemen oder eine Kette usw., miteinander verbunden sind, die geeignet sind, eine gleichzeitige Drehbewegung zwischen den beiden Elementen (46, 47) zu übertragen, wobei ein zweites Element (49) zur Übertragung der Drehbewegung auf dem oberen Teil mindestens eines dieser letzteren angeordnet ist, wie zum Beispiel ein Zahnrad oder eine Riemenscheibe usw., das mittels eines zweiten Verbindungsmittels (50), wie zum Beispiel eines Zahnriemens oder einer Kette usw., verbunden ist an ein drittes Element (51) zur Übertragung der Drehbewegung, das Teil eines elektrischen Mittels (52) zur Erzeugung der Drehbewegung ist, wobei dieses letztere geeignet ist, die verschiedenen Elemente zur Übertragung der Drehbewegung, die miteinander verbunden sind, in der einen oder in der anderen Richtung zu drehen, so dass sich die länglichen Elemente (42 und 43) synchron in der gleichen Richtung drehen können, zusätzliche längliche Elemente (53), wie z.B. Stangen, die jeweils gleitend in die vertikalen hohlen Führungselemente (35, 36 und 37, 38) eingesetzt sind und deren oberer Endabschnitt einstückig mit dem beweglichen Körper (24) verbunden ist, während die unteren Endabschnitte (55) jedes der länglichen Elemente (53) einstückig durch einen Rahmen (56) mit viereckiger Basis miteinander verbunden sind, vorzugsweise rechteckig, verbunden sind, wobei dieser letztere mit inneren Verlängerungen versehen ist, die jeweils ihrerseits mit einem Körper (58) versehen sind, der mit einem zentralen Gewindedurchgangsloch (59') versehen ist, das so angeordnet und bemessen ist, dass es mit dem Gewindeteil eines entsprechenden länglichen Elements (42, 43) gekoppelt werden kann, bei dieser Konfiguration drehen sich die länglichen Elemente (42, 43) durch Aktivierung der elektrischen Mittel (52) in der einen und in der anderen Richtung synchron in derselben Richtung, so dass die Körper (58) auf diesen in der einen und in der anderen Richtung gleiten können, wobei sie den beweglichen Körper (24) in Bezug auf den inneren Boden (17, 29) in Richtung der Tiefe der Wanne (21) zurückziehen oder annähern können.

6. Vorrichtung nach Anspruch 5, **dadurch gekennzeichnet, dass** die ersten Elemente (46, 47) zur Übertragung der Drehbewegung, die einer Vielzahl von nebeneinander angeordneten Wannen (21) zugeordnet sind, mittels des Verbindungselements (48) miteinander verbunden sind, um die beweglichen Körper (24) jeder Wanne (21) in gleicher und synchroner Weise zu bewegen.

7. Vorrichtung nach Anspruch 6, **dadurch gekennzeichnet, dass** auf jedem hohlen Träger (39, 40) unter dem jeweiligen Element (46, 47) zur Übertragung der Drehbewegung eine Platte (59) angeordnet ist, die mindestens mit einem Schlitz (60) versehen ist, in den ein Trägerelement (61) eingesetzt und daran befestigt ist, und die geeignet ist, ein viertes Element (62) zur Übertragung der Drehbewegung, wie z.B. ein Zahnrad oder eine Riemenscheibe usw., zu tragen, auf der gleichen Höhe wie das jeweilige erste Element (46, 47) zur Übertragung der Drehbewegung beabstandet angeordnet ist, an dem das Verbindungselement (48) angebracht werden kann, wobei das Stützelement (61) entlang des gesamten Schlitzes (60) in seiner Position arretiert werden kann, um das Verbindungselement (48) in geeigneter Weise zu spannen.

8. Vorrichtung nach Anspruch 1, **dadurch gekennzeichnet, dass** jede Halbform (12) mit einer Umfangswand (30'), wie z.B. einem Gehäuse, versehen ist, die zwischen dem Rand des äußeren unteren Teils (25) und dem Umfangsrand (27) verbunden ist, wobei die Umfangswand geeignet ist, eine Kammer (30) um die Wanne (21) herum zu bilden, und mit der die Mittel zum Einführen des Materials, die Mittel zum Einspritzen von Dampf, die Mittel zum Sprühen von Flüssigkeit, die geeignet sind, das gesinterte Material abzukühlen, und die Mittel zum Sprühen von Flüssigkeit, die geeignet sind, das gesinterte Material abzukühlen, verbunden sind und mit ihnen in Verbindung stehen die erste Saugeinrichtung, die dazu geeignet ist, das gesinterte Material durch Erzeugung eines Vakuums zu stabilisieren, wobei jede Wanne (21), die in der Vorrichtung (10) vorhanden ist, an ihren Seitenwänden (31) mit einer Vielzahl von Mikrolöchern oder Mikrospalten versehen ist, die für den Durchgang des Dampfes, der Kühlflüssigkeit und der Luft geeignet sind, die durch die oben genannte Einrichtung erzeugt werden, wobei der bewegliche Körper (24) mit Durchgangslöchern zum Einführen des Materials auf Polymerbasis in die jeweilige Wanne (21) versehen ist, wobei das lineare Bewegungssystem (26) mit dem äußeren unteren Teil (25) verbunden ist.

9. Vorrichtung nach Anspruch 8, **dadurch gekennzeichnet, dass** die erste Halbform (11) an ihrem oberen Teil eine Kammer (72) aufweist, die durch ein kastenförmiges Gehäuse (71) gebildet wird, das mit zweiten Ansaugmitteln des an sich bekannten Typs verbunden ist und mit diesen in Verbindung steht, die geeignet sind, die Platte auf derselben ersten Halbform (11) in Position zu halten.

10. Vorrichtung nach Anspruch 1, **dadurch gekennzeichnet, dass** die erste Halbform (11) an ihrem oberen Teil eine Kammer (72) aufweist, die durch ein kastenförmiges Gehäuse (71) gebildet wird, das mit der Materialeinführungseinrichtung, der Dampfeinspritzeinrichtung, der Flüssigkeitsspritzeinrichtung, die dazu geeignet ist, das gesinterte Material abzukühlen, und der ersten Saugeinrichtung, die dazu geeignet ist, das gesinterte Material durch die Erzeugung eines Vakuums zu stabilisieren, verbunden ist und mit diesen in Verbindung steht, wobei jede in der Vorrichtung (10) vorhandene Wanne (21) an ihren Seitenwänden (31) mit einer Vielzahl von Mikrolöchern oder Mikrospalten versehen ist, die für den Durchgang des Dampfes, der Kühlflüssigkeit und der durch die oben genannten Mittel erzeugten Luft geeignet sind, sowie mit einer Vielzahl von Abflüssen, die mittels Ventilmitteln geöffnet und geschlossen werden können, vorzugsweise des elektronischen Typs, geöffnet und geschlossen werden können, um Dampf und Flüssigkeiten abzulassen, wobei der bewegliche Körper (24) mit Durchgangslöchern zum Einführen von Material auf Polymerbasis in die jeweilige Wanne (21) versehen ist, wobei das lineare Bewegungssystem (26) mit dem äußeren unteren Teil der ersten Halbform (11) verbunden ist.

11. Vorrichtung nach Anspruch 10, **dadurch gekennzeichnet, dass** jede Halbform (12) mit einer Umfangswand (30'), wie z.B. einer Verkleidung, versehen ist, die zwischen dem Rand des äußeren unteren Teils (25) und dem Umfangsrand (27) angebracht ist, wobei die Verkleidung geeignet ist, eine Kammer (30) um die Wanne (21) zu bilden, mit der zweite Ansaugmittel des an sich bekannten Typs verbunden sind und in Verbindung stehen, die geeignet sind, die Platte auf derselben Halbform (12) in Position zu halten.

12. Vorrichtung nach einem oder mehreren der vorhergehenden Ansprüche, **dadurch gekennzeichnet, dass** die elektrischen und elektronischen Bauteile der Vorrichtung (10) zusätzlich zu einer elektrischen Stromversorgung an ein elektronisches Kontroll- und Steuersystem, wie zum Beispiel eine elektronische Leiterplatte oder ein PLC-System, angeschlossen werden können, das so eingestellt werden kann, dass es die Schritte eines Verfahrens zur Herstellung einer gewünschten Dämmplatte auf automatische Weise durchführt.

13. Vorrichtung nach Anspruch 12, **dadurch gekennzeichnet, dass** ein solches dem linearen Bewegungssystem (26) zugeordnetes Kontroll- und Steuersystem zur Bestimmung der Länge der Vorschübe des beweglichen Körpers (24) in der einen oder in der anderen Richtung eingerichtet ist.

14. Verfahren zur Herstellung einer Dämmplatte unter Verwendung der Vorrichtung (10) nach einem oder mehreren der Ansprüche 1-13 und unter Verwendung von Material, das aus Granulat aus expandierten Polymeren hergestellt ist, und das die folgenden Schritte umfasst:
a. Positionierung des beweglichen Körpers (24) in unmittelbarer Nähe der freien Endabschnitte (34) der länglichen Körper (23) und Annäherung der zweiten Halbform (12) an die erste Halbform (11), bis die freien Endabschnitte (34) mit den Löchern (18, 70) des inneren Bodens (17, 29) der gegenüberliegenden Halbform (11 oder 12) gekoppelt sind, und durch Belassen eines Entlüftungsschlitzes zwischen dem Umfang der oberen Öffnung (22) und dem Umfang des erhöhten Abschnitts (17);
b. Bewegen des beweglichen Körpers (24) um eine vorbestimmte Strecke in Richtung des inneren Bodens (17, 29) der Halbform (11 oder 12), mit der er verbunden ist, in Bezug auf die Oberfläche des gegenüberliegenden inneren Bodens (17, 29), so dass ein Leerraum (63) entsteht;
c. Einführen von mindestens einem Granulat aus geschäumtem Polymer, das im Inneren des leeren Raums (63) gesintert werden soll, mittels der ersten Materialeinführungseinrichtung, während die in diesem letzteren enthaltene Luft durch den Entlüftungsschlitz austritt, wobei das Granulat aus geschäumtem Polymer in einer solchen Menge eingeführt wird, dass eine erste Dichte erhalten wird, die von dem Volumen der zu erhaltenden Schicht der Dämmplatte abhängt;
d. Verschieben der Halbform (12), bis sie an die erste Halbform (11) stößt, um den erhabenen Teil (17) mit der Öffnung (22) zu verbinden und einen geschlossenen Raum (64) zu erhalten, der mit dem Granulat aus geschäumtem Polymer gefüllt ist und eine Höhe aufweist, die der Dicke der zu erhaltenden Schicht der Dämmplatte entspricht;
e. Sintern des Granulats aus geschäumtem Polymer mittels Dampf, der in die Kammer (30) durch die Sintermittel eingespritzt wird, wobei eine gesinterte Schicht (65) erhalten wird, wobei der Dampf durch die Mikrolöcher oder Mikrospalten der Wände (31) und die Löcher des beweglichen Körpers (24) in der Wanne (21) und insbesondere in den Raum (64) eintritt, wobei das Granulat aus geschäumtem Polymer gesintert wird, um dann durch die Abflüsse nach außen abgeleitet zu werden;
f. Abkühlung der gesinterten Schicht (65) durch Aufsprühen von Kühlflüssigkeit, vorzugsweise Wasser, auf dieselbe Schicht, wobei die Flüssigkeit mit Hilfe der Sprühmittel eingespritzt und dann über die Abflüsse abgeleitet wird;
g. Stabilisierung der gesinterten Schicht (65) durch die Erzeugung eines Vakuums in der Kammer (30) und der Wanne (21) durch die geeigneten ersten Saugmittel;
h. Zurückziehen der beweglichen Halbform (12),
h1. das Entfernen der gesinterten Schicht (65), die als einlagige Dämmplatte wirkt, oder
h2. um eine mehrschichtige Dämmplatte zu erhalten, weicht die bewegliche Halbform (12) von der ersten Halbform (11) zurück, um wieder den Entlüftungsschlitz zu bilden, während das erste Ansaugmittel die gesinterte Schicht (65) in Position hält und der bewegliche Körper (24) sich um einen voreingestellten Abstand (Z) von der unteren Oberfläche (66) der gesinterten Schicht (65) bewegt, der der Dicke der zweiten Schicht der zu erhaltenden Dämmplatte entspricht, wodurch ein Leerraum (67) entsteht;
i. nach dem Unterschritt h2. das Einbringen mindestens einer zweiten Menge von Granulat aus expandiertem Polymer in den leeren Raum (67), in einer solchen Menge, dass eine gesinterte Schicht mit einer Dichte und/oder einem Material erhalten werden kann, die sich von denen der ersten gesinterten Schicht (65) unterscheiden, je nach der Dicke der zu erhaltenden zweiten Schicht, mittels zweiter Materialeinbringungsmittel;
j. nach dem Schritt i. das Bewegen der Halbform (12), bis sie an der ersten Halbform (11) anliegt, um den erhabenen Teil (17) mit der Öffnung (22) zu verbinden;
k. nach dem Schritt j. das Sintern der zweiten Menge an Granulat aus expandiertem Polymer und das Verbinden durch Schmelzen mit der ersten gesinterten Schicht (65) mittels Dampf, der durch die Sintermittel eingeleitet wird, um dann durch die Abflüsse nach außen abgeleitet zu werden, um so eine mehrschichtige Dämmplatte (69) mit zwei miteinander verbundenen gesinterten Schichten (65, 68) zu erhalten;
l. nach dem Schritt k. Abkühlung der mehrschichtigen Dämmplatte (69) durch Versprühen von Kühlflüssigkeit, die mit Hilfe der geeigneten Sprühmittel eingespritzt und dann durch die Abflüsse abgeleitet wird;
m. nach dem Schritt l. die Stabilisierung der mehrschichtigen Dämmplatte (69) durch die Erzeugung eines Vakuums mit Hilfe der geeigneten ersten Saugvorrichtung;
n. nach dem Schritt m., Wiederholung des Schritts h., dann Entfernung der erhaltenen mehrschichtigen Dämmplatte oder Herstellung einer zusätzlichen Schicht auf der Basis von mindestens Granulat aus expandiertem Polymer und deren Verbindung mit der bis dahin erhaltenen mehrschichtigen Dämmplatte durch erneute Anwendung der Schritte h2-m.

15. Verfahren nach Anspruch 14, **dadurch gekennzeichnet, dass** das expandierte Polymer des Granulats vom synthetischen Typ ist, wie zum Beispiel expandiertes Polystyrol, oder vom natürlichen Typ, sogenannter biobasierter Schaum, der auf PLA (Polymilchsäure) oder anderen gleichwertigen Materialien basiert.

16. Verfahren nach Anspruch 15, **dadurch gekennzeichnet, dass** für jede einzelne Schicht der zu erhaltenden Dämmplatte das entsprechende Granulat aus expandiertem Polymer vorher mit anderen Materialien gemischt werden kann, die geeignet sind, bestimmte physikalisch-mechanische Eigenschaften zu verleihen, wie zum Beispiel Graphit, Metallpulver, Hartplastik, usw.

17. Dämmplatte, die durch Sintern mehrerer Schichten von Granulat aus expandierten Polymeren nach dem Verfahren der Ansprüche 14-16 erhalten wird, die mit quer verlaufenden, durchgehenden Mikrolöchern (69') versehen sind, die parallel zueinander verlaufen, wobei jede eigene Schicht eine vorbestimmte Dicke, Dichte und ein vorbestimmtes Material aufweist, **dadurch gekennzeichnet, dass** die Schichten ohne Verwendung von Klebematerialien miteinander verbunden sind.

18. Dämmplatte nach Anspruch 17, **dadurch gekennzeichnet, dass** eine Dicke von ebenfalls mehr als 200 mm aufweist und die quer verlaufenden Durchgangslöcher (69') eine Dicke von gleich oder kleiner als 5 mm haben.

## Revendications

1. Dispositif (10) pour l'obtention de panneaux isolants à base de polymères destinés au secteur de la construction et en particulier à être appliqués sur les murs intérieurs et/ou extérieurs, les toits, les appuis de fenêtres, les cavités de bâtiments de différents types, par exemple les maisons, les bâtiments commerciaux, etc., pour leur isolation thermique, ledit dispositif (10) étant constitué par au moins un moule comprenant deux demi-moules (11 et 12) pourvus de zones de travail respectives (13 et 14), pouvant être accouplés l'un à l'autre au moyen d'un mouvement linéaire d'au moins un de ces deux demi-moules (11 ou 12), du type mobile, en rapprochement et en recul par rapport à l'autre demi-moule (11 ou 12) fixe, le premier demi-moule (11) constituant le mâle tandis que le deuxième demi-moule (12) constituant le femelle et étant façonné au moins avec une cuve (21) à base quadrangulaire, de préférence rectangulaire, avec une ouverture (22) tournée vers la zone de travail (13) du premier demi-moule (11), le dispositif (10) comprenant en outre
une pluralité de corps allongés (23), par exemple des aiguilles, des tiges, qui sont disposés à distance et parallèlement les uns aux autres et fixés avec une partie de leur extrémité au fond interne (17, 29) d'un demi-moule (11 ou 12) et avec l'autre partie de l'extrémité (34) libre et qui sont allongés dans la direction de la profondeur de ladite cuve (21), tandis que l'autre demi-moule (11 ou 12) est pourvu d'une pluralité de trous (18, 70) espacés et parallèles les uns aux autres et disposés chacun coaxialement à un corps allongé respectif (23), un corps mobile (24) étant logé à l'intérieur de ladite cuve (21) et ayant la même forme que cette dernière et dimensionné avec une telle base pour remplir presque complètement sa section transversale, et étant pourvu d'une pluralité de trous de passage, parallèles les uns aux autres et espacés et dimensionnés pour le passage de ces corps allongés (23), ledit corps mobile (24) coulissant linéairement dans la direction de ladite profondeur de la cuve (21) et étant adapté pour être placé à proximité des parties d'extrémité libre (34) des corps allongés (23) pour leur accouplement avec les trous (18, 70) et pour être éloigné du fond interne du demi-corps (11 ou 12) pourvu des trous (18, 70) pour l'insertion d'une ou de plusieurs couches de matériau polymère à traiter, ledit dispositif (10) étant également équipé au moins d'un premier moyen d'introduction de matériau adapté pour introduire dans la cuve (21) un matériau à base de polymère, d'un moyen d'injection de vapeur adapté pour fritter ledit matériau à base de polymère, d'un premier moyen d'aspiration adapté pour stabiliser le matériau fritté au moyen de la création d'un vide, le dispositif (10) **caractérisé en ce que** la zone de fonctionnement (13) du premier demi-moule (11) comprend au centre au moins une première partie plate surélevée (17) à base quadrangulaire, de préférence rectangulaire, adaptée pour être couplée avec ladite ouverture (22), le dispositif (10) étant également équipé au moins d'un moyen de pulvérisation de liquide adapté pour refroidir le matériau fritté.

2. Dispositif selon la revendication 1, **caractérisé en que** ledit corps mobile (24) est associé à un système de mouvement linéaire (26), qui est fixé à l'extérieur du demi-moule (11 o 12), au fond interne (17, 29) duquel les corps allongés (23) sont joints, ledit système de mouvement linéaire (26) étant adapté pour déplacer linéairement ledit corps mobile (24) dans la direction de la profondeur de la cuve (21).

3. Dispositif selon la revendication 1, **caractérisé en ce que** il comprend une pluralité de bacs (21) joints parallèlement et espacés les uns des autres et une pluralité de parties surélevées (17) en nombre et dimensionnées de manière à pouvoir être accouplées auxdits bacs (21).

4. Dispositif selon l'une des revendications précédentes, **caractérisé en ce que** ladite cuve (21) est pourvue d'un bord périphérique extérieur plat (27) en correspondance de son ouverture (22), ayant fondamentalement la même forme et les mêmes dimensions que la partie surélevée (17) du premier demi-moule (11) et pourvue à chacun de ses sommets au moins d'un élément creux allongé (28), par exemple un tuyau, prolongé orthogonalement vers le fond de la même cuve (21), tandis que ladite zone de fonctionnement (13) est pourvue à chacun de ses sommets au moins d'un élément allongé rectiligne (20), par exemple une goupille, étendue orthogonalement à elle, chaque élément creux (28) et chaque élément allongé rectiligne (20) étant adapté pour être couplé afin de maintenir l'alignement en approche entre le premier et le second demi-moule (11 et 12).

5. Dispositif selon la revendication 2, **caractérisé en ce que** le fond de chaque bac (21) est pourvu d'une pluralité de trous de passage, dans lesquels des éléments de guidage creux verticaux respectifs (35, 36 et 37, 38) sont insérés et fixés à, par exemple, des douilles, ledit système de mouvement linéaire (26) comprenant au moins deux supports creux (39, 40), allongés vers l'extérieur, ouverts à leur partie terminale (41) et placés entre les paires d'éléments de guidage creux verticaux (35, 36 et 37, 38), et dans lequel deux supports creux (39, 40) un élément rotatif allongé respectif (42, 43) étant inséré avec sa partie terminale et bloqué en translation, ce dernier étant en outre fileté au moins partiellement dans sa partie libre et étant pourvu intégralement dans la partie terminale libre (41) d'un premier élément (46, 47) pour transmettre le mouvement de rotation, par exemple une roue dentée ou une poulie, etc., lesdits éléments (46, 47) de transmission du mouvement de rotation étant reliés entre eux par un premier élément de liaison (48), par exemple une courroie dentée ou une chaîne, etc., adapté pour transférer un mouvement de rotation simultané entre lesdits deux éléments (46, 47), un deuxième élément (49) pour transférer le mouvement de rotation étant positionné sur la partie supérieure d'au moins un de ces derniers, par exemple une roue dentée ou une poulie, etc. connecté au moyen d'un deuxième moyen de connexion (50), par exemple une courroie crantée ou une chaîne, etc., à un troisième élément (51) de transfert du mouvement de rotation, faisant partie d'un moyen électrique (52) de génération du mouvement de rotation, ce dernier étant apte à faire tourner les différents éléments de transfert du mouvement de rotation reliés entre eux dans un sens ou dans l'autre, les éléments allongés (42 et 43) pouvant ainsi tourner de manière synchrone dans le même sens, des éléments allongés supplémentaires (53), par exemple des tiges, étant chacune insérée de manière coulissante dans lesdits éléments de guidage creux verticaux (35, 36 et 37, 38) et dont une partie d'extrémité supérieure est jointe intégralement au corps mobile (24), tandis que les parties d'extrémité inférieures (55) de chaque élément allongé (53) sont jointes l'une à l'autre de manière intégrale par un cadre (56) à base quadrangulaire, de préférence rectangulaire, ce dernier étant pourvu d'extensions internes munies chacune à leur tour d'un corps (58) pourvu d'un trou central fileté (59'), placé et dimensionné pour pouvoir être accouplé à la partie filetée d'un élément allongé respectif (42, 43), dans cette configuration, en activant les moyens électriques (52) dans un sens ou dans l'autre, les éléments allongés (42, 43) tournent de manière synchrone, dans le même sens, de manière à ce que les corps (58) puissent glisser sur ces derniers dans un sens ou dans l'autre, pouvant ainsi déplacer le corps mobile (24) en recul ou en rapprochement par rapport au fond interne (17, 29), dans le sens de la profondeur de la baignoire (21).

6. Dispositif selon la revendication 5, **caractérisé en ce que** lesdits premiers éléments (46, 47) de transfert du mouvement de rotation, associés à une pluralité de bacs (21) disposés de manière adjacente, sont reliés entre eux au moyen de l'élément de liaison (48) pour déplacer les corps mobiles (24) de chaque bac (21) de manière égale et synchrone.

7. Dispositif selon la revendication 6, **caractérisé en ce que** une plaque (59) est positionnée sur chaque support creux (39, 40), sous l'élément respectif (46, 47) pour transférer le mouvement de rotation, et est pourvue au moins d'une fente (60), dans laquelle un élément de support (61) est inséré et fixé, et est adapté pour supporter un quatrième élément (62) pour transférer le mouvement de rotation, par exemple une roue d'engrenage ou une poulie, etc., disposé à distance au même niveau du premier élément respectif (46, 47) pour transférer le mouvement de rotation, sur lequel il est possible d'associer ledit élément de connexion (48), ledit élément de support (61) étant adapté pour être bloqué en position le long de la fente entière (60) pour tendre opportunément l'élément de connexion (48).

8. Dispositif selon la revendication 1, **caractérisé en ce que** chaque demi-moule (12) est pourvu d'une paroi périphérique (30'), par exemple une enveloppe, jointe entre le bord de la partie inférieure externe (25) et le bord périphérique (27), laquelle paroi périphérique est adaptée pour créer une chambre (30) autour de la cuve (21) et à laquelle sont connectés et communiquant avec lesdits moyens d'introduction de matière, lesdits moyens d'injection de vapeur, lesdits moyens de pulvérisation de liquide adaptés pour refroidir la matière frittée et ledit premier moyen d'aspiration adapté pour stabiliser le matériau fritté au moyen de la création d'un vide, chaque bac (21) présent dans le dispositif (10) étant pourvu sur ses parois latérales (31) d'une pluralité de micro-trous ou de micro-fentes adaptés pour le passage de la vapeur, du liquide de refroidissement et de l'air produits par les moyens susmentionnés, ledit corps mobile (24) étant pourvu de trous de passage pour l'insertion du matériau à base de polymère à l'intérieur du bac respectif (21), ledit système de mouvement linéaire (26) étant relié à ladite partie inférieure externe (25).

9. Dispositif selon la revendication 8, **caractérisé en ce que** ledit premier demi-moule (11) comporte dans sa partie supérieure une chambre (72), formée par une enveloppe en forme de boîte (71), qui est reliée et communique avec de seconds moyens d'aspiration du type connu en soi, aptes à maintenir le panneau en position sur le même premier demi-moule (11).

10. Dispositif selon la revendication 1, **caractérisé en ce que** ledit premier demi-moule (11) a sur sa partie supérieure une chambre (72), formée par une enveloppe en forme de boîte (71), qui est reliée et communique avec lesdits moyens d'introduction de matière, lesdits moyens d'injection de vapeur, lesdits moyens de pulvérisation de liquide adaptés pour refroidir la matière frittée et lesdits premiers moyens d'aspiration adaptés pour stabiliser la matière frittée au moyen de la création d'un vide, chaque bac (21) présent dans le dispositif (10) étant pourvu sur ses parois latérales (31) d'une pluralité de micro-trous ou de micro-fentes adaptés au passage de la vapeur, du liquide de refroidissement et de l'air produits par les moyens susmentionnés et d'une pluralité de drains, qui peuvent être ouverts et fermés au moyen de vannes, de préférence du type électronique, adaptés à l'évacuation des vapeurs et des liquides, ledit corps mobile (24) étant pourvu de trous de passage pour l'introduction du matériau à base de polymère à l'intérieur de la cuve respective (21), ledit système de mouvement linéaire (26) étant relié à ladite partie inférieure externe du premier demi-moule (11).

11. Dispositif selon la revendication 10, **caractérisé en ce que** chaque demi-moule (12) est pourvu d'une paroi périphérique (30'), par exemple une enveloppe, jointe entre le bord de la partie inférieure externe (25) et le bord périphérique (27), laquelle enveloppe est apte à créer une chambre (30) autour de la cuve (21), à laquelle sont joints et communiquent des seconds moyens d'aspiration du type connu en soi, aptes à maintenir le panneau en position sur le même demi-moule (12).

12. Dispositif selon une ou plusieurs des revendications précédentes, **caractérisé en ce que** les éléments composants électriques et électroniques dudit dispositif (10) peuvent être connectés, en plus d'une alimentation électrique, à un système électronique de contrôle et de commande, par exemple une carte de circuit électronique ou un système PLC, adapté pour être réglé afin d'obtenir les étapes d'un processus d'obtention d'un panneau isolant désiré de manière automatique.

13. Dispositif selon la revendication 12, **caractérisé en ce que** un tel système de contrôle et de commande associé au système de mouvement linéaire (26) est réglé pour déterminer la longueur des avancements du corps mobile (24) dans une direction ou dans l'autre.

14. Procédé d'obtention d'un panneau isolant à l'aide du dispositif (10) selon l'une ou plusieurs des revendications 1-13, et utilisant un matériau constitué de granulés de polymères expansés et comprenant les étapes suivantes:
a. positionnement du corps mobile (24) à proximité des extrémités libres (34) des corps allongés (23) et rapprochement du second demi-moule (12) du premier demi-moule (11) jusqu'à ce que les extrémités libres (34) soient couplées avec les trous (18, 70) du fond interne (17, 29) du demi-moule opposé (11 ou 12) et en laissant une fente d'aération entre le périmètre de l'ouverture supérieure (22) et le périmètre de la partie surélevée (17);
b. déplacement du corps mobile (24) d'une distance prédéterminée vers le fond interne (17, 29) du demi-moule (11 ou 12) auquel il est joint, par rapport à la surface du fond interne opposé (17, 29) obtenant ainsi un espace vide (63);
c. introduction, au moyen desdits premiers moyens d'introduction du matériau, d'au moins des granulés de polymère expansé à fritter à l'intérieur de l'espace vide (63), tandis que l'air contenu dans ce dernier sort par ladite fente d'aération, lesdits granulés de polymère expansé étant introduits en une quantité telle qu'ils permettent d'obtenir une première densité en fonction du volume de la couche de panneau d'isolation à obtenir;
d. déplacement du demi-moule (12) jusqu'à ce qu'il vienne en butée contre le premier demi-moule (11) pour accoupler la partie surélevée (17) avec l'ouverture (22) et obtenir un espace fermé (64) rempli de granulés de polymère expansé et ayant une hauteur correspondant à l'épaisseur de la couche de panneau isolant à obtenir;
e. frittage des granulés de polymère expansé au moyen de vapeur injectée dans la chambre (30) par lesdits moyens de frittage, obtenant une couche frittée (65), ladite vapeur pénétrant par lesdits micro-trous ou micro-fentes des parois (31) et les trous du corps mobile (24) dans la cuve (21) et plus particulièrement dans l'espace (64), frittant les granulés de polymère expansé pour être ensuite évacués à l'extérieur par lesdits drains;
f. refroidissement de la couche frittée (65) par pulvérisation d'un liquide de refroidissement, de préférence de l'eau, sur la même couche, liquide injecté au moyen desdits moyens de pulvérisation et ensuite drainé au moyen desdits drains;
g. stabilisation de la couche frittée (65) en créant un vide à l'intérieur de la chambre (30) et de la cuve (21) par l'intermédiaire des premiers moyens d'aspiration appropriés;
h. recul du demi-moule mobile (12),
h1. élimination de la couche frittée (65) agissant comme panneau isolant monocouche ou
h2. pour obtenir un panneau isolant multicouche, le demi-moule mobile (12) se retire du premier demi-moule (11) jusqu'à créer à nouveau la fente d'aération, tandis que le premier moyen d'aspiration maintient en position la couche frittée (65) et que le corps mobile (24) se déplace d'une distance prédéfinie (Z) de la surface inférieure (66) de la couche frittée (65), correspondant à l'épaisseur de la deuxième couche du panneau isolant à obtenir, en créant de la sorte un espace vide (67);
i. après ladite sous-étape h2, introduction d'au moins une deuxième quantité de granulés de polymère expansé à l'intérieur de l'espace vide (67), en quantité telle qu'elle permette d'obtenir une couche frittée avec une densité et/ou un matériau différents par rapport à ceux de la première couche frittée (65), en fonction de l'épaisseur de la deuxième couche à obtenir, au moyen de seconds moyens d'introduction de matériau;
j. après ladite étape i., déplacement du demi-moule (12) jusqu'à ce qu'il vienne en butée contre le premier demi-moule (11) pour coupler la partie surélevée (17) avec l'ouverture (22);
k. après ladite étape j., frittage de la deuxième quantité de granulés de polymère expansé et assemblage par fusion avec la première couche frittée (65) au moyen de vapeur injectée à travers lesdits moyens de frittage, pour être ensuite évacuée à l'extérieur par lesdits drains, en obtenant ainsi un panneau isolant multicouche (69) avec deux couches frittées (65, 68) assemblées l'une à l'autre;
l. après ladite étape k., refroidir le panneau isolant multicouche (69) au moyen d'une pulvérisation de liquide de refroidissement, injecté au moyen desdits moyens de pulvérisation appropriés et ensuite évacué par lesdits drains;
m. après ladite étape 1., stabiliser le panneau isolant multicouche (69) par la création d'un vide au moyen dudit premier moyen d'aspiration approprié;
n. après ladite étape m., répétition de ladite étape h., puis enlèvement du panneau isolant multicouche obtenu ou création d'une couche supplémentaire à base au moins de granulés de polymère expansé et assemblage de celle-ci au panneau isolant multicouche obtenu jusqu'à présent en utilisant à nouveau lesdites étapes h2-m.

15. Procédé selon la revendication 14, **caractérisé en ce que** le polymère expansé desdits granulés est de type synthétique, par exemple le polystyrène expansé, ou de type naturel, dit mousse biosourcée, c'est-à-dire à base de PLA (acide polylactique) ou d'autres matériaux équivalents.

16. Procédé selon la revendication 15, **caractérisé en ce que** pour chaque couche unique de panneau isolant à obtenir, les granulés relatifs de polymère expansé sont préalablement mélangeables avec d'autres matériaux adaptés pour conférer des propriétés physico-mécaniques déterminées, par exemple le graphite, la poudre métallique, le plastique dur, etc.

17. Panneau isolant obtenu par le frittage de plusieurs couches de granulés de polymères expansés selon le procédé des revendications 14-16, pourvu de micro-trous transversaux traversants (69') parallèles les uns aux autres et chaque couche propre ayant une épaisseur, une densité et des matériaux prédéterminés, **caractérisé en ce que** lesdites couches sont assemblées les unes aux autres sans l'utilisation de matériaux adhésifs.

18. Panneau isolant selon la revendication 17, **caractérisé en ce qu'**il a une épaisseur également supérieure à 200 mm et les trous transversaux (69') ont une épaisseur égale ou inférieure à 5 mm.
